# EUROPEAN PATENT APPLICATION

(11) **EP 4 694 568 A1**
(43) Date of publication of application: **11.02.2026**
(21) Application number: 24791771.9
(22) Date of filing: 12.03.2024
(51) Int. Cl.: H04W 80/06

(54) **COMMUNICATION METHOD AND APPARATUS**

(30) Priority: 19.04.2023 CN 202310468401
(71) Applicant: Huawei Technologies Co., Ltd., Shenzhen, Guangdong 518129 (CN)
(72) Inventor: HAN, Zhilin, Shenzhen, Guangdong 518129 (CN); XU, Yishan, Shenzhen, Guangdong 518129 (CN); ZHOU, Runze, Shenzhen, Guangdong 518129 (CN)
(74) Representative: Thun, Clemens
(86) International application number: PCT/CN2024/081119
(87) International publication number: WO 2024/217183

(57) **Abstract**

Embodiments of this application provide a communication method and apparatus. The method includes: A reader receives a first packet sent by a user plane function UPF network element through a first tunnel, where one end of the first tunnel is connected to the reader, the other end of the first tunnel is connected to the UPF network element, the first packet includes first indication information, and the first indication information indicates the reader to perform a first operation; and the reader performs the first operation based on the first indication information. The reader receives a first operation result from at least one first passive terminal, and sends the first operation result to the UPF network element, where the at least one first passive terminal is within a signal coverage area of the reader. The first tunnel is a user plane channel, and the user plane channel is deployed in a campus in which a business entity is located. When a server and a passive terminal perform data transmission through the first tunnel, it can be effectively ensured that transmitted data does not go out of the campus, thereby avoiding the risk of data leakage and implementing secure data transmission.

## Description

### CROSS-REFERENCE TO RELATED APPLICATIONS

This application claims priority to Chinese Patent Application No. 202310468401.9, filed with the China National Intellectual Property Administration on April 19, 2023 and entitled "COMMUNICATION METHOD AND APPARATUS", which is incorporated herein by reference in its entirety.

### TECHNICAL FIELD

The present invention relates to the field of wireless communication technologies, and in particular, to a communication method and apparatus.

### BACKGROUND

With rapid development of electronic information technologies, passive internet of things technologies have been applied to various fields. A passive internet of things architecture includes a passive terminal, a reader, and a server. The server performs data transmission with the passive terminal through the reader.

Currently, data transmission is typically performed between the server and the passive terminal via a control plane channel in a core network. However, using the control plane channel for data transmission has risks of data leakage. Therefore, there is an urgent need for a more secure data transmission solution.

### SUMMARY

Embodiments of this application provide a communication method and apparatus, to resolve a problem of secure data transmission.

According to a first aspect, an embodiment of this application provides a communication method. An execution body of the method is a reader or a module or chip in the reader. An example in which the reader is the execution body is used for description herein. The method includes: The reader receives a first packet sent by a user plane function UPF network element through a first tunnel, where one end of the first tunnel is connected to the reader, the other end of the first tunnel is connected to the UPF network element, the first packet includes first indication information, and the first indication information indicates the reader to perform a first operation; the reader performs the first operation based on the first indication information; and the reader receives a first operation result from at least one first passive terminal, and sends the first operation result to the UPF network element, where the at least one first passive terminal is within a signal coverage area of the reader.

In the method, the first tunnel is a user plane channel, and the user plane channel may be deployed in a campus in which a business entity is located. When a server and a passive terminal perform data transmission through the first tunnel, it can be effectively ensured that transmitted data does not go out of the campus, thereby avoiding the risk of data leakage and implementing secure data transmission.

In a possible design, the first indication information includes the first operation; and that the reader performs the first operation based on the first indication information may include: The reader obtains the first operation from the first indication information, and performs the first operation. According to this design, a manner of performing the first operation by the reader is provided.

In a possible design, the first indication information includes a first session identifier. That the reader performs the first operation based on the first indication information includes: The reader determines, based on the first session identifier and a preset mapping relationship, the first operation corresponding to the first session identifier, and performs the first operation. According to this design, a manner of performing the first operation by the reader is provided.

In a possible design, the mapping relationship includes a first mapping relationship, and the first mapping relationship includes a mapping relationship between a first tunnel identifier and a preset operation. According to this design, a manner of performing the first operation by the reader is provided.

In a possible design, the mapping relationship includes a second mapping relationship and a third mapping relationship, the second mapping relationship includes a mapping relationship between a first tunnel identifier and a preset service type, and the third mapping relationship includes a mapping relationship between the preset service type and a preset operation. That the reader determines, based on the first session identifier and the preset mapping relationship, the first operation corresponding to the first session identifier may include: The reader first determines, based on the first session identifier and the second mapping relationship, a first service type corresponding to the first session identifier; and then the reader determines, based on the first service type and the third mapping relationship, the first operation corresponding to the first service type. According to this design, a manner of performing the first operation by the reader is provided.

In a possible design, the first indication information includes a first service type. That the reader performs the first operation based on the first indication information includes: The reader determines, based on the first service type and a preset mapping relationship, the first operation corresponding to the first service type, and performs the first operation. According to this design, a manner of performing the first operation by the reader is provided.

In a possible design, the mapping relationship includes a third mapping relationship, and the third mapping relationship includes a mapping relationship between a preset service type and a preset operation. According to this design, a manner of performing the first operation by the reader is provided.

In a possible design, before the first packet sent by the user plane function UPF network element through the first tunnel is received, the method further includes: The reader receives a first message sent by a session management function SMF network element, where the first message includes second indication information, the second indication information indicates the reader to set the mapping relationship, and the mapping relationship is used to determine the first operation; and the reader sets the mapping relationship based on at least the second indication information in the first message. According to this design, an implementation of setting the mapping relationship is provided.

In a possible design, the second indication information includes the preset operation, and the first message further includes the first tunnel identifier. That the reader sets the mapping relationship based on at least the second indication information in the first message may include: The reader establishes the first mapping relationship between the first tunnel identifier and the preset operation. According to this design, an implementation of setting the mapping relationship is provided.

In a possible design, the second indication information includes the preset service type, and the first message further includes the first tunnel identifier. That the reader sets the mapping relationship based on at least the second indication information in the first message may include: The reader establishes the second mapping relationship between the first tunnel identifier and the preset service type. According to this design, an implementation of setting the mapping relationship is provided.

In a possible design, the second indication information includes the preset service type and the preset operation. That the reader sets the mapping relationship based on at least the second indication information in the first message may include: establishing the third mapping relationship between the preset service type and the preset operation. According to this design, an implementation of setting the mapping relationship is provided.

According to a second aspect, an embodiment of this application provides a communication method. An execution body of the method is a UPF network element or a module or chip in the UPF network element. An example in which the UPF network element is the execution body is used for description herein. The method includes: The UPF network element receives a second packet from a server, where the second packet includes four-tuple information; and the UPF network element sends a first packet to a reader through a first tunnel, where the first packet includes first indication information, the first indication information is determined based on the four-tuple information, the first indication information indicates the reader to perform a first operation, one end of the first tunnel is connected to the reader, and the other end of the first tunnel is connected to the UPF network element.

In the method, the first tunnel is a user plane channel, and the user plane channel is deployed in a campus in which a business entity is located. When a server and a passive terminal perform data transmission through the first tunnel, it can be effectively ensured that transmitted data does not go out of the campus, thereby avoiding the risk of data leakage and implementing secure data transmission.

In a possible design, the first indication information is determined in the following manner: The UPF network element determines, based on the four-tuple information and a fourth mapping relationship, a first service type corresponding to the four-tuple information, where the fourth mapping relationship includes a mapping relationship between preset four-tuple information and a preset service type; the UPF network element determines, based on a fifth mapping relationship, the first operation corresponding to the first service type, where the fifth mapping relationship includes a mapping relationship between the preset service type and a preset operation; and the UPF network element generates the first indication information based on the first operation. According to this design, a manner of generating the first indication information is provided.

In a possible design, the first indication information is determined in the following manner: The UPF network element determines, based on the four-tuple information and a sixth mapping relationship, the first operation corresponding to the four-tuple information, where the sixth mapping relationship includes a mapping relationship between preset four-tuple information and a preset operation; and the UPF network element generates the first indication information based on the first operation. According to this design, a manner of generating the first indication information is provided.

In a possible design, the first indication information is determined in the following manner: The UPF network element determines, based on the four-tuple information and a fourth mapping relationship, a first service type corresponding to the four-tuple information, where the fourth mapping relationship includes a mapping relationship between preset four-tuple information and a preset service type; the UPF network element determines, based on a seventh mapping relationship, a first session identifier corresponding to the first service type, where the seventh mapping relationship includes a mapping relationship between the preset service type and a first tunnel identifier; and the UPF network element generates the first indication information based on the first session identifier. According to this design, a manner of generating the first indication information is provided.

In a possible design, the first indication information is determined in the following manner: The UPF network element determines, based on the four-tuple information and a fourth mapping relationship, a first service type corresponding to the four-tuple information, where the fourth mapping relationship includes a mapping relationship between preset four-tuple information and a preset service type; and the UPF network element generates the first indication information based on the first service type. According to this design, a manner of generating the first indication information is provided.

In a possible design, before the UPF network element receives the second packet from the server, the method further includes: The UPF network element receives the fourth mapping relationship from a session management function SMF network element, where the fourth mapping relationship is generated based on the preset four-tuple information and the preset service type. According to this design, an implementation of the mapping relationship is provided.

In a possible design, before the UPF network element receives the second packet from the server, the method further includes: The UPF network element receives the fifth mapping relationship from an SMF network element, where the fifth mapping relationship is generated based on the preset service type and the preset operation. According to this design, an implementation of the mapping relationship is provided.

In a possible design, before the UPF network element receives the second packet from the server, the method further includes: The UPF network element receives the sixth mapping relationship from an SMF network element, where the sixth mapping relationship is generated based on the preset four-tuple information and the preset operation. According to this design, an implementation of the mapping relationship is provided.

In a possible design, before the UPF network element receives the second packet from the server, the method further includes: The UPF network element receives the seventh mapping relationship from an SMF network element, where the seventh mapping relationship is generated based on the preset service type and the first tunnel identifier. According to this design, an implementation of the mapping relationship is provided.

In a possible design, the preset four-tuple information is generated based on an address and a port number of the server, and an address and a port number of the UPF network element. According to this design, an implementation of the preset four-tuple information is provided.

According to a third aspect, an embodiment of this application provides a communication method. An execution body of the method is a TMF network element or a module or chip in the TMF network element. An example in which the TMF network element is the execution body is used for description herein. The method includes: The TMF network element receives a second message from a server, where the second message indicates a session management function SMF network element to establish a first tunnel; and the TMF network element sends a third message to the SMF network element, where the third message includes second indication information, the second indication information indicates a reader to set a mapping relationship, and the mapping relationship is used by the reader to determine a first operation. In the method, a method for efficiently establishing a tunnel is provided.

In a possible design, the second message includes a preset service type, and the second indication information is determined based on the preset service type. According to this design, an implementation of the second indication information is provided.

In a possible design, the second indication information is determined in the following manner: The TMF network element determines, based on the preset service type and an eighth mapping relationship, a preset operation corresponding to the preset service type, where the eighth mapping relationship includes a mapping relationship between a specified service type and a specified operation; and the TMF network element uses the preset operation as the second indication information. According to this design, an implementation of the second indication information is provided.

In a possible design, the second indication information is determined in the following manner: The TMF network element uses the preset service type as the second indication information. According to this design, an implementation of the second indication information is provided.

In a possible design, the second indication information is determined in the following manner: The TMF network element determines, based on the preset service type and an eighth mapping relationship, a preset operation corresponding to the preset service type, where the eighth mapping relationship includes a mapping relationship between a specified service type and a specified operation; and the TMF network element uses the preset service type and the preset operation as the second indication information. According to this design, an implementation of the second indication information is provided.

In a possible design, the second indication information is determined based on an eighth mapping relationship, and the eighth mapping relationship includes a mapping relationship between a specified service type and a specified operation. According to this design, an implementation of the second indication information is provided.

In a possible design, the second indication information is determined in the following manner: The TMF network element uses the specified service type as a preset service type; the TMF network element uses the specified operation as a preset operation; and the TMF network element uses the preset service type and the preset operation as the second indication information. According to this design, an implementation of the second indication information is provided.

In a possible design, the third message further includes a session tag, and the session tag is generated by the TMF network element based on the preset service type. According to this design, a manner of generating the session tag is provided.

In a possible design, the second message further includes an address and a port number of the server, and the third message further includes the address and the port number of the server. According to this design, an implementation of the third message is provided.

According to a fourth aspect, an embodiment of this application provides a communication method. An execution body of the method is an SMF network element or a module or chip in the SMF network element. An example in which the SMF network element is the execution body is used for description herein. The method includes: The SMF network element receives a third message sent by a tag management function TMF network element, where the third message includes second indication information, the second indication information indicates a reader to set a mapping relationship, the mapping relationship is used by the reader to determine a first operation, and the third message further includes an address and a port number of a server. The SMF network element receives an address and a port number of a UPF network element that are sent by the UPF network element, the SMF network element sets the mapping relationship based on at least one of the address and the port number of the server, the address and the port number of the UPF network element, and the second indication information, and the SMF network element sends a fifth message to the UPF network element, where the fifth message includes the mapping relationship. In the method, a method for efficiently establishing a tunnel is provided.

In a possible design, the method further includes: The SMF network element sends a fourth message to the user plane function UPF network element, where the fourth message indicates the UPF network element to send CN tunnel information; the SMF network element receives the core network CN tunnel information sent by the UPF network element; the SMF network element determines a first tunnel identifier based on at least the CN tunnel information; the SMF network element sends a first message to the reader, where the first message includes the CN tunnel information and the second indication information; and the SMF network element receives access network AN tunnel information sent by the reader. According to this design, a method for efficiently establishing a tunnel is provided.

In a possible design, the CN tunnel information includes a tunnel endpoint identifier TEID and a transport layer address. That the SMF network element determines the first tunnel identifier based on at least the CN tunnel information may include: The SMF network element determines the first tunnel identifier based on the TEID and the transport layer address in the CN tunnel information. According to this design, a manner of generating the first tunnel identifier is provided.

In a possible design, the third message further includes a session tag, and the CN tunnel information includes a TEID and a transport layer address. That the SMF network element determines the first tunnel identifier based on at least the CN tunnel information may include: The SMF network element determines the first tunnel identifier based on the TEID and the transport layer address in the CN tunnel information and the session tag. According to this design, a manner of generating the first tunnel identifier is provided.

According to a fifth aspect, this application further provides a communication apparatus. The communication apparatus can implement any method provided in any one of the first aspect to the fourth aspect. The communication apparatus may be implemented by hardware, or may be implemented by executing corresponding software by hardware. The hardware or the software includes one or more units or modules corresponding to the foregoing function.

In a possible design, the communication apparatus includes a processor. The processor is configured to support the communication apparatus in performing a corresponding function performed by the reader, the UPF network element, the TMF network element, or the SMF network element in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal apparatus.

In a possible design, the communication apparatus includes corresponding functional modules configured to implement the steps in the foregoing method. The function may be implemented by hardware, or may be implemented by executing corresponding software by hardware. The hardware or the software includes one or more modules corresponding to the foregoing function.

In a possible design, a structure of the communication apparatus includes a processing unit, a sending unit, and a receiving unit. These units may perform corresponding functions in the foregoing method examples. For details, refer to descriptions in the method provided in any one of the first aspect to the fourth aspect. Details are not described herein.

According to a sixth aspect, an embodiment of this application further provides a communication apparatus. The communication apparatus includes modules/units for performing any method provided in any one of the first aspect to the fourth aspect. These modules/units may be implemented by hardware, or may be implemented by executing corresponding software by hardware.

According to a seventh aspect, an embodiment of this application provides a communication apparatus, including a memory and a processor. The processor is configured to execute a computer program or instructions stored in the memory, to cause the communication apparatus to implement any method provided in any one of the first aspect to the fourth aspect.

According to an eighth aspect, an embodiment of this application further provides a computer-readable storage medium. The computer-readable storage medium includes a computer program, and when the computer program is run on a communication apparatus, the computer-readable storage medium is caused to implement any method provided in any one of the first aspect to the fourth aspect.

According to a ninth aspect, an embodiment of this application further provides a computer program product. When the computer program product runs on a communication apparatus, the communication apparatus is caused to implement the method according to any one of the first aspect to the fourth aspect and the possible designs of the first aspect to the fourth aspect.

According to a tenth aspect, a chip is provided. The chip includes a processor, may further include a memory, and is configured to implement the method according to any one of the first aspect to the fourth aspect and any possible implementation of any aspect. The chip may include a chip, or may include a chip and another discrete component.

According to an eleventh aspect, a communication system is provided, including a reader, a UPF network element, a TMF network element, and an SMF network element.

The reader is configured to implement the method in the first aspect and any possible implementation of the first aspect. The UPF network element is configured to implement the method in the second aspect and any possible implementation of the second aspect. The TMF network element is configured to implement the method in the third aspect and any possible implementation of the third aspect. The SMF network element is configured to implement the method in the fourth aspect and any possible implementation of the fourth aspect.

These aspects or other aspects of this application are clearer and easier to understand in descriptions of the following embodiments.

### BRIEF DESCRIPTION OF DRAWINGS

FIG. 1 is a diagram of a 5G network architecture based on a service-based architecture;
FIG. 2 is a diagram of a 5G network architecture based on a service-based architecture;
FIG. 3 is a schematic flowchart of a communication method according to an embodiment of this application;
FIG. 4 is a diagram of a structure of a first tunnel identifier according to an embodiment of this application;
FIG. 5 is a diagram of a structure of a first tunnel identifier according to an embodiment of this application;
FIG. 6 is a schematic flowchart of a communication method according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

The following describes technical solutions in embodiments of this application with reference to the accompanying drawings in embodiments of this application.

The following describes some terms in embodiments of this application, to facilitate understanding of a person skilled in the art.
(1) Passive internet of things (passive internet of things, P-IoT; or ambient internet of things, A-IoT; or Ambient power-enabled Internet of Things): Some nodes in a communication network may be passive, and may obtain energy by using solar energy, radio frequency, wind energy, water energy, tidal energy, or the like. An energy obtaining manner is not limited. These nodes are not equipped with or do not depend on power supply devices such as batteries, but obtain energy from an environment, to support data sensing, transmission, and distributed computing. In addition, the nodes may further store the obtained energy. A passive internet of things architecture includes a passive terminal, a reader, and a server. It should be noted that the present invention is also applicable to an active terminal type in the A-IoT.
(2) A passive terminal may be in a tag form, such as a passive tag, or may be in any other terminal form. Each passive terminal corresponds to a tag identifier (tag identifier, TID). The tag identifier may be a globally unique identifier, for example, an electronic product code (electronic product code, EPC), or may be a temporary identifier or a globally non-unique identifier. The tag identifier may include a network identifier and/or a user identifier and/or a tag sequence number. The tag sequence number is used for an internal unique tag of the user.
(3) A reader may be an access network device, such as a base station, a pole station, a micro base station, or a macro base station, or may be a terminal device, such as a mobile phone, an internet of things (internet of things, IoT) device, or a handheld reader/writer. The reader performs non-contact bidirectional data communication in a wireless radio frequency manner, and reads/writes an electronic tag or a radio frequency card (Tag) in the wireless radio frequency manner, to identify a passive terminal and exchange data with the passive terminal. The passive terminal has two working modes. One mode is that when the passive terminal enters an effective identification range of the reader, the passive terminal receives a radio frequency signal sent by the reader, and sends, by using energy obtained through an induced current, information stored in a chip of the passive terminal. The other mode is that the passive terminal may store some electric energy by using solar energy or the like, so that the passive terminal can actively send information at a specific frequency (this may also be referred to as a semi-passive or semi-active terminal), and the reader receives and decodes the information, and then sends the information to a central information system for related data processing.
(4) Inventory operation: The inventory operation may also be referred to as a counting operation. Through the inventory operation, a reader may obtain a tag identifier of a passive terminal, and send the obtained tag identifier to a server.
(5) Read (Read) operation: The read operation can read data information in a storage area of a passive terminal. The passive terminal may have a storage function, and the storage area of the passive terminal can store data. If a server intends to perform a read operation on the passive terminal, the server sends a read instruction, and a reader or a core network performs a read operation on the passive terminal according to the read instruction, reads data from the storage area of the passive terminal, and sends the read data to the server. Based on this definition, the read operation may further include a sensor (sensor) operation, that is, reading sensor data of the passive terminal.
(6) Write (Write) operation: A reader may write to-be-written information into a storage area of a passive terminal. A server may send a write instruction, and the reader or a core network performs a write operation on the passive terminal according to the write instruction, to write data into the storage area of the passive terminal.
(7) Positioning operation: refers to obtaining location information of a passive terminal. If a server intends to perform a positioning operation on the passive terminal, the server sends a positioning instruction, and a reader or a core network performs a positioning operation on the passive terminal, obtains the location information of the passive terminal, and sends the location information to the server.
(8) Disable (Kill) operation: The disable operation can invalidate or disable a tag identifier in a passive terminal, that is, the passive terminal no longer participates in an inventory operation and another operation.
(9) Tag information obtaining operation (including an inventory operation, a read operation, a positioning operation, and the like): The tag information obtaining operation does not distinguish whether a server inventories a tag identifier of a passive terminal, reads data information stored in the passive terminal, or obtains location information of the passive terminal. The operation obtains tag information, and the tag information may be the tag identifier of the passive terminal, the data information stored in a storage area of the passive terminal, or the location information of the passive terminal.

It should be noted that, in the following of this application, a tag is used as an example of a passive terminal, and an access network device is used as an example of a reader. This should not be considered as a specific limitation on this application.

The following describes embodiments of this application in detail with reference to the accompanying drawings.

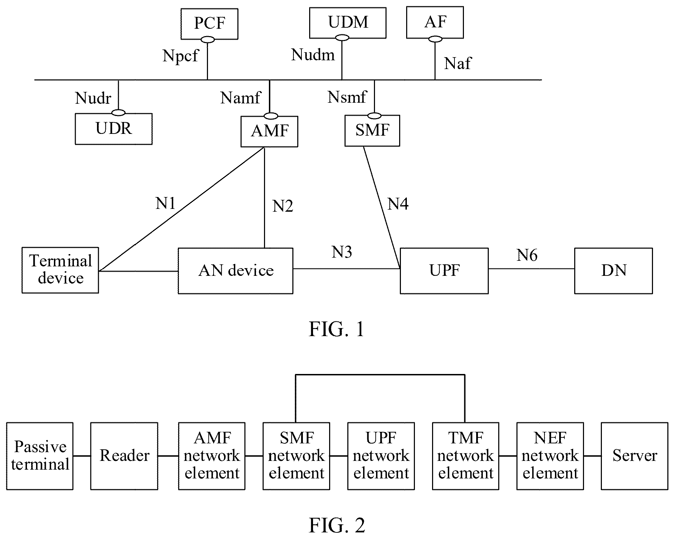

FIG. 1 is a diagram of an architecture of a communication system according to an embodiment of this application, and shows a 5th generation (the 5th generation, 5G) network architecture based on a service-based architecture. The 5G network architecture shown in FIG. 1 may include a terminal device, an access network (access network, AN) device, and a core network (core network, CN) device. The terminal device accesses a data network (data network, DN) through the access network device and the core network device. The following describes components of the communication system.

The terminal device includes a device that provides voice and/or data connectivity for a user. For example, the terminal device is a device that has wireless receiving and sending functions; and may be deployed on land, where the deployment includes indoor, outdoor, handheld, wearable, or vehicle-mounted deployment; or may be deployed on a water surface (for example, on a ship); or may be deployed in the air (for example, on an airplane, a balloon, and a satellite). The terminal device may be a tag (Tag), a mobile phone (mobile phone), a tablet computer (Pad), a computer with wireless receiving and sending functions, a virtual reality (virtual reality, VR) terminal, an augmented reality (augmented reality, AR) terminal, a wireless terminal in industrial control (industrial control), a vehicle-mounted terminal, a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application. The terminal device may also be sometimes referred to as a terminal, user equipment (user equipment, UE), an access terminal, a vehicle-mounted terminal, a terminal in industrial control, a UE unit, a UE station, a mobile station, a remote station, a remote terminal, a mobile device, a UE terminal, a wireless communication device, a UE agent, a UE apparatus, or the like. The terminal may alternatively be fixed or movable. It may be understood that all or some functions of the terminal in this application may alternatively be implemented by using a software function running on hardware, or may be implemented by using an instantiated virtualization function on a platform (for example, a cloud platform). The terminal device in this application may be a 5G terminal, or may be a 6G terminal. This is not limited in this application.

The access network device is a device providing a wireless communication function for the terminal device. For example, the access network device includes but is not limited to: a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseBand unit, BBU), a transmitting and receiving point (transmitting and receiving point, TRP), a transmitting point (transmitting point, TP), a mobile switching center, or the like.

In some deployments, the gNB may include a central unit (central unit, CU) and a distributed unit (distributed unit, DU). The gNB may further include an active antenna unit (active antenna unit, AAU). The CU can implement some functions of the gNB, and the DU can implement other functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated by the PHY layer of the DU into information at the PHY layer, or is converted from information at the PHY layer. Therefore, in this architecture, higher layer signaling, for example, RRC layer signaling, may also be considered to be sent by the DU, or sent by the DU and the AAU. It may be understood that the access network device may include one or more of a CU node, a DU node, or an AAU node. In addition, the CU may be classified into an access network device in an access network, or the CU may be classified into an access network device in a CN. The access network device may be a radio access network (RAN) device or a wireline access network (wireline access network, FAN) device. The RAN device may be a 5G RAN device, or may be a 6G RAN device, or may have another name. This is not limited in this application.

The access network device and the terminal device may be at fixed locations, or may be movable. The access network device and the terminal device may be deployed on land, including an indoor or outdoor device, a handheld device, or a vehicle-mounted device; or may be deployed on a water surface; or may be deployed on a plane, a balloon, and an artificial satellite in the air. Application scenarios of the access network device and the terminal device are not limited in embodiments of this application.

The core network device includes some or all of the following network elements: a unified data management (unified data management, UDM) network element, a unified data repository (unified data repository, UDR) network element, a network exposure function (network exposure function, NEF) network element (not shown in the figure), an application function (application function, AF) network element, a policy control function (policy control function, PCF) network element, an access and mobility management function (access and mobility management function, AMF) network element, a tag management function (tag management function, TMF) network element, a session management function (session management function, SMF) network element, a user plane function (user plane function, UPF) network element, and a network repository function (network repository function, NRF) network element (not shown in the figure).

The mobility management network element is a control plane network element provided by an operator network, and is responsible for access control and mobility management for accessing the operator network by the terminal device, for example, including functions such as mobility status management, allocation of a temporary user identity, and user authentication and authorization. In 5G, the mobility management network element may be the AMF network element. In future communication such as the 6th generation (the 6th generation, 6G), the mobility management network element may still be the AMF network element, or may have another name. This is not limited in this application.

The tag management function network element may process a tag operation, perform access control on a tag, manage a reader/writer, route and forward tag data, and the like. In 5G, the tag management function network element may be the TMF network element. In future communication such as the 6th generation (the 6th generation, 6G), the tag management function network element may still be the TMF network element, or may have another name. This is not limited in this application. The TMF network element may be an independent network element, or may be integrated with another network element in a core network. For example, the TMF network element may be integrated with the AMF network element.

The session management network element is a control plane network element provided by the operator network, and is responsible for managing a protocol data unit (protocol data unit, PDU) session of the terminal device. The PDU session is a channel used to transmit a PDU, and the terminal device and the DN need to transmit PDUs to each other through the PDU session. The SMF network element is responsible for establishment, maintenance, deletion, and the like of the PDU session. The session management network element includes session-related functions such as session management (for example, session establishment, modification, and release, including maintenance of a tunnel between a user plane network element and the access network device), selection and control of the user plane network element, service and session continuity (Service and Session Continuity, SSC) mode selection, and roaming. In 5G, the session management network element may be the SMF network element. In future communication such as 6G, the session management network element may still be the SMF network element, or may have another name. This is not limited in this application.

The user plane network element is a gateway provided by an operator, and is a gateway for communication between the operator network and the DN. The UPF network element includes user plane-related functions such as data packet routing and transmission, packet detection, traffic usage reporting, quality of service (Quality of Service, QoS) handling, lawful intercept, uplink packet detection, and downlink data packet storage. In 5G, the user plane network element may be the UPF network element. In future communication such as 6G, the user plane network element may still be the UPF network element, or may have another name. This is not limited in this application.

The data management network element is a control plane network element provided by the operator, and is responsible for storing information such as a subscriber permanent identifier (subscriber permanent identifier, SUPI), a credential (credential), a security context (security context), and subscription data of a subscriber in the operator network. The information stored in the data management network element may be used for authentication and authorization for accessing the operator network by the terminal device. The subscriber in the operator network may be specifically a user using a service provided by the operator network, for example, a user using a SIM card of China Telecom, or a user using a SIM card of China Mobile. The subscription permanent identifier (Subscription Permanent Identifier, SUPI) of the subscriber may be a number of the mobile phone SIM card or the like. The credential and the security context of the subscriber may be stored small files such as an encryption key of the mobile phone SIM card or information related to encryption of the mobile phone SIM card, and are used for authentication and/or authorization. The security context may be data (cookie), a token (token), or the like stored in a local terminal (for example, a mobile phone) of the user. The subscription data of the subscriber may be a supporting service of the mobile phone SIM card, for example, a traffic package or a used network of the mobile phone SIM card. It should be noted that for ease of description, information such as the permanent identifier, the credential, the security context, authentication data (cookie), and the token related to authentication and authorization is not limited or distinguished in documents of this application. Unless otherwise specified, the security context is used as an example for description in embodiments of this application. However, embodiments of this application are also applicable to authentication and/or authorization information described in another manner. In 5G, the data management network element may be the UDM network element. In future communication such as 6G, the data management network element may still be the UDM network element, or may have another name. This is not limited in this application.

The unified data repository network element is a control plane network element provided by the operator, and includes a function of accessing data of a type such as subscription data, policy data, and application data. In 5G, the unified data repository network element may be the UDR network element. In future communication such as 6G, the unified data repository network element may still be the UDR network element, or may have another name. This is not limited in this application.

The network exposure network element is a control plane network element provided by the operator. The network exposure network element securely exposes an external interface of the operator network to a third party. When the session management network element needs to communicate with a third-party network element, the network exposure network element may serve as a relay for communication between the session management network element and the third-party network element. When the network exposure network element serves as the relay, the network exposure network element may translate identification information of a subscriber and identification information of the third-party network element. For example, when sending an SUPI of the subscriber from the operator network to the third party, the network exposure network element may translate the SUPI into an external identity (identity, ID) corresponding to the SUPI. On the contrary, when sending an external ID (a network element ID of the third party) to the operator network, the network exposure network element may translate the external ID into an SUPI. In 5G, the network exposure network element may be the NEF network element. In future communication such as 6G, the network exposure network element may still be the NEF network element, or may have another name. This is not limited in this application.

The application function network element is configured to transfer requirements of an application side for a network side, for example, a QoS requirement or a user status event subscription. The application function network element may be a third-party functional entity, or may be an application server deployed by the operator. In 5G, the application function network element may be the AF network element. In future communication such as 6G, the application function network element may still be the AF network element, or may have another name. This is not limited in this application.

The policy control network element is a control plane function provided by the operator, and is configured to provide a policy of the PDU session for the session management network element. The policy may include a charging-related policy, a QoS-related policy, an authorization-related policy, and the like. In 5G, the policy control network element may be the PCF network element. In future communication such as 6G, the policy control network element may still be the PCF network element, or may have another name. This is not limited in this application.

The network repository function network element may be configured to: provide a network element discovery function, and provide, based on a request of another network element, network element information corresponding to a network element type. The network repository function network element further provides a network element management service, for example, network element registration, update, and de-registration, and network element status subscription and push. In 5G, the network repository function network element may be the NRF network element. In future communication such as 6G, the network repository function network element may still be the NRF network element, or may have another name. This is not limited in this application.

The data network is a network located outside the operator network. The operator network may access a plurality of DNs, and a plurality of services may be deployed on the DN, to provide services such as data and/or voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server to obtain an instruction of the control server, transmit collected sensor data to the control server according to the instruction, and the like. For another example, the DN is an internal office network of a company, a mobile phone or a computer of an employee of the company may be the terminal device, and the mobile phone or the computer of the employee may access information, data resources, and the like on the internal office network of the company.

In FIG. 1, Npcf, Nudr, Nudm, Naf, Namf, and Nsmf are respectively service-based interfaces provided by the PCF, the UDR, the UDM, the AF, the AMF, and the SMF, and are configured to invoke corresponding service-based operations. An N1 interface is an interface between the AMF and the terminal device, and may be configured to transfer NAS signaling (for example, including a QoS rule from the AMF) and the like to the terminal device. An N2 interface is an interface between the AMF and the RAN, and may be configured to transfer radio bearer control information and the like from a core network side to the RAN. An N3 interface is an interface between the RAN and the UPF, and is mainly configured to transfer uplink/downlink user plane data between the RAN and the UPF. An N4 interface is an interface between the SMF and the UPF, and may be configured to transfer information between a control plane and a user plane, including delivery of a forwarding rule, a QoS control rule, a traffic statistics rule, and the like from the control plane to the user plane, and reporting of user plane information. An N6 interface is an interface between the UPF and DN, and is configured to transfer an uplink/downlink user data flow between the UPF and the DN.

It is specified that the terminal device in FIG. 1 is a passive terminal, the access network device is a reader, and the application function network element is a server. Based on the system architecture shown in FIG. 1, FIG. 2 is a diagram of an architecture of another communication system to which an embodiment of this application is applicable. As shown in FIG. 2, the communication system may include a passive terminal, a reader, an AMF network element, an SMF network element, a UPF network element, a TMF network element, an NEF network element, and a server. For specific content of the passive terminal, the reader, the AMF network element, the SMF network element, the UPF network element, the TMF network element, the NEF network element, and the server, refer to the descriptions of FIG. 1. Repeated content is not described again.

The server may directly communicate with the NEF network element, the NEF network element may directly communicate with the TMF network element, the TMF network element may directly communicate with the SMF network element, the SMF network element may directly communicate with the UPF and may directly communicate with the AMF network element, the AMF network element may directly communicate with the reader, and the reader may directly communicate with the passive terminal.

It may be understood that the foregoing network elements or functions may be network elements in a hardware device, software functions running on dedicated hardware, or virtualized functions instantiated on a platform (for example, a cloud platform). In a possible implementation method, the foregoing network elements or functions may be implemented by one device, may be implemented by a plurality of devices, or may be one function module in one device. This is not specifically limited in embodiments of this application.

It should be noted that the communication system shown in FIG. 1 or FIG. 2 does not constitute a limitation on the communication system to which embodiments of this application are applicable. Therefore, a communication method provided in embodiments of this application is further applicable to communication systems of various standards, for example, a long term evolution (long term evolution, LTE) communication system, a 5G communication system, a 6G communication system, a future communication system, vehicle to everything (vehicle to everything, V2X), long term evolution-vehicle (LTE-vehicle, LTE-V), vehicle to vehicle (vehicle to vehicle, V2V), internet of vehicles, machine type communication (Machine Type Communication, MTC), IoT, long term evolution-machine to machine (LTE-machine to machine, LTE-M), machine to machine (machine to machine, M2M), internet of things, and the like. In addition, it should be further noted that names of network elements in the communication system are not limited in embodiments of this application. For example, in communication systems of different standards, network elements may have other names. For another example, when a plurality of network elements are integrated into a same physical device, the physical device may alternatively have another name.

The following describes the solutions provided in this application with reference to the accompanying drawings.

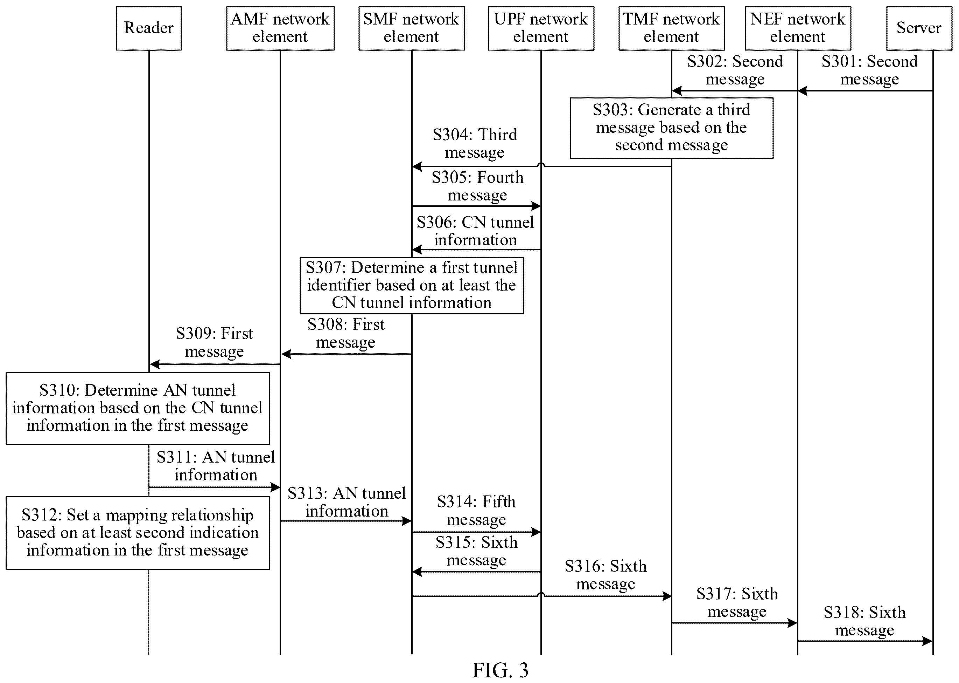

An embodiment of this application provides a communication method, used to establish a first tunnel between a reader and a UPF network element. The first tunnel is used to transmit only a first packet, and a service type of the first packet may include any one of the following: an inventory type, a read type, a write type, a positioning type, a disable type, a tag information obtaining type, and the like. The read type includes a common read type and a batch read type, and the write type includes a common write type and a batch write type. The communication method may be applied to the communication system shown in FIG. 2. The following specifically describes a procedure of the method with reference to a flowchart shown in FIG. 3.

S301: A server sends a second message to an NEF network element.

In a possible implementation, the second message includes a server identifier, an address and a port number of the server, and a preset service type. In this embodiment of this application, the server may be an application function network element. For example, the server is an AF network element. When the server is the AF network element, the second message includes an AF identifier, an address and a port number of the AF, and the preset service type.

The preset service type may include any one of the following: an inventory type, a common read type, a common write type, a batch read type, a batch write type, a positioning type, a disable type, a tag information obtaining type, and the like.

The second message may further include area information of a to-be-operated passive terminal. If the second message does not include area information of a to-be-operated tag, a TMF network element may query subscription data of the server, and obtain the area information of the to-be-operated passive terminal from the subscription data.

S302: The NEF network element sends the second message to the TMF network element.

In a possible implementation, the server may alternatively directly send the second message to the TMF network element without using the NEF network element.

S303: The TMF network element generates a third message based on the second message.

In a possible implementation, the TMF network element selects, from a plurality of candidate SMF network elements based on the obtained area information of the to-be-operated passive terminal, an SMF network element associated with the area information. A specific implementation may be: converting the area information of the to-be-operated passive terminal into a cell list, and selecting, from the plurality of candidate SMF network elements based on the cell list, an SMF network element associated with the cell list.

In a possible implementation, the third message includes second indication information, the second indication information is determined based on the preset service type in the second message, the second indication information indicates a reader to set a mapping relationship, and the mapping relationship is used by the reader to determine a first operation.

The TMF network element may determine the second indication information in the following three possible implementations. The specific implementations may be as follows:

Implementation a1: The TMF network element uses the preset service type as the second indication information.

Implementation a2: The TMF network element determines, based on the preset service type and an eighth mapping relationship, a preset operation corresponding to the preset service type, and uses the preset operation as the second indication information. The eighth mapping relationship includes a mapping relationship between a specified service type and a specified operation. It should be understood that the eighth mapping relationship may be stored in the TMF network element, or may be stored in another device that can be accessed by the TMF network element. This is not limited herein.

In a possible implementation, the specified service type in the eighth mapping relationship includes any one of the following: an inventory type, a common read type, a common write type, a batch read type, a batch write type, a positioning type, a disable type, a tag information obtaining type, and the like.

The specified operation in the eighth mapping relationship includes any one of the following: an inventory operation, a common read operation, a common write operation, a batch read operation, a batch write operation, a positioning operation, a disable operation, a tag information obtaining operation, and the like.

A mapping relationship between a specified service type and a specified operation is shown in Table 1.

**Table 1**

| Specified service type | Specified operation |
|---|---|
| Inventory type | Inventory operation |
| Common read type | Common read operation |
| Common write type | Common write operation |
| Batch read type | Batch read operation |
| Batch write type | Batch write operation |
| Positioning type | Positioning operation |
| Disable type | Disable operation |
| Tag information obtaining type | Tag information obtaining operation |

An example in which the specified service type is the inventory type in Table 1 is used for description, and a specified operation corresponding to the inventory type is the inventory operation. When the specified service type is another type (other than the inventory type), a method for determining the specified operation is similar to the foregoing method, and details are not described below.

It is assumed that a signal coverage area of the reader includes M passive terminals, and all the M passive terminals need to respond to a broadcast message sent by the reader. The following describes the specified operation in Table 1 in detail.

When the specified operation is the inventory operation, it may be understood that the reader sends a first broadcast message to the M passive terminals, where the first broadcast message indicates the passive terminal to send a tag identifier to the reader. After receiving the first broadcast message, the M passive terminals respectively send respective corresponding tag identifiers to the reader. After receiving a tag identifier sent by a passive terminal, the reader sends the tag identifier to the server through a UPF network element, and waits for a tag identifier sent by another passive terminal (other than the passive terminal that has sent the tag identifier).

When the specified operation is the common read operation, it may be understood that the reader sends a second broadcast message to the M passive terminals, where the second broadcast message indicates the passive terminal to send data information in a storage area of the passive terminal to the reader. After receiving the second broadcast message, the M passive terminals respectively send data information in respective storage areas to the reader. After receiving data information sent by a passive terminal, the reader sends the data information to the server through a UPF network element, and waits for data information sent by another passive terminal (other than the passive terminal that has sent the data information).

When the specified operation is the common read operation, it may be further understood that the reader sends a third broadcast message to the M passive terminals, where the third broadcast message indicates the passive terminal to send a tag identifier to the reader. After receiving the third broadcast message, the M passive terminals respectively send respective corresponding tag identifiers to the reader. After receiving a tag identifier sent by a passive terminal, the reader sends the tag identifier to the server through a UPF network element, and maintains a connection to the passive terminal that sends the tag identifier. The server sends a fourth broadcast message to the reader through the UPF network element, where the fourth broadcast message includes the tag identifier obtained by the server, and the fourth broadcast message indicates the passive terminal to send data information in a storage area of the passive terminal to the reader. After receiving the fourth broadcast message, the reader sends the fourth broadcast message to the passive terminal for which the connection is maintained. After receiving the fourth broadcast message, the passive terminal sends the data information in the storage area to the reader. After receiving the data information sent by the passive terminal, the reader sends the data information to the server through the UPF network element, cancels the connection to the passive terminal, and waits for a tag identifier sent by another passive terminal (other than the passive terminal that has sent the tag identifier).

When the specified operation is the common read operation, it may be further understood that the reader sends a third broadcast message to the M passive terminals, where the third broadcast message indicates the passive terminal to send a tag identifier to the reader. After receiving the third broadcast message, the M passive terminals respectively send respective corresponding tag identifiers to the reader. After receiving a tag identifier sent by a passive terminal, the reader sends the tag identifier to the server through a UPF network element. The server sends a fourth broadcast message to the reader through the UPF network element, where the fourth broadcast message includes the tag identifier obtained by the server, and the fourth broadcast message indicates the passive terminal to send data information in a storage area of the passive terminal to the reader. After receiving the fourth broadcast message, the reader sends the fourth broadcast message to the M passive terminals. After receiving the fourth broadcast message, each of the M passive terminals performs matching on a tag identifier of the passive terminal based on the tag identifier in the fourth broadcast message; and if the matching succeeds, sends data information in a storage area to the reader; or if the matching fails, does not perform any processing. After receiving the data information sent by the passive terminal, the reader sends the data information to the server through the UPF network element, and waits for a tag identifier sent by another passive terminal (other than the passive terminal that has sent the tag identifier).

When the specified operation is the common write operation, it may be understood that the reader sends a fifth broadcast message to the M passive terminals, where the fifth broadcast message includes to-be-written information, and the fifth broadcast message indicates the passive terminal to write the to-be-written information into a storage area of the passive terminal. After receiving the fifth broadcast message, the M passive terminals respectively write the to-be-written information into respective storage areas. If the passive terminal successfully writes the to-be-written information into the storage area, the passive terminal sends a write success message to the reader; otherwise, the passive terminal sends a write failure message to the reader. After receiving a write success message or a write failure message sent by a passive terminal, the reader sends the write success message or the write failure message to the server through a UPF network element, and waits for a write success message or a write failure message sent by another passive terminal (other than the passive terminal that has sent the write success message or the write failure message).

When the specified operation is the common write operation, it may be further understood that the reader sends a sixth broadcast message to the M passive terminals, where the sixth broadcast message indicates the passive terminal to send a tag identifier to the reader. After receiving the sixth broadcast message, the M passive terminals respectively send respective corresponding tag identifiers to the reader. After receiving a tag identifier sent by a passive terminal, the reader sends the tag identifier to the server through a UPF network element, and maintains a connection to the passive terminal that sends the tag identifier. The server sends a seventh broadcast message to the reader through the UPF network element, where the seventh broadcast message includes the tag identifier obtained by the server and to-be-written information, and the seventh broadcast message indicates the passive terminal to write the to-be-written information into a storage area of the passive terminal. After receiving the seventh broadcast message, the reader sends the seventh broadcast message to the passive terminal for which the connection is maintained. After receiving the seventh broadcast message, the passive terminal writes the to-be-written information into the storage area. If the passive terminal successfully writes the to-be-written information into the storage area, the passive terminal sends a write success message to the reader; otherwise, the passive terminal sends a write failure message to the reader. After receiving the write success message or the write failure message sent by the passive terminal, the reader sends the write success message or the write failure message to the server through the UPF network element, cancels the connection to the passive terminal, and waits for a tag identifier sent by another passive terminal (other than the passive terminal that has sent the tag identifier).

When the specified operation is the common write operation, it may be further understood that the reader sends a sixth broadcast message to the M passive terminals, where the sixth broadcast message indicates the passive terminal to send a tag identifier to the reader. After receiving the sixth broadcast message, the M passive terminals respectively send respective corresponding tag identifiers to the reader. After receiving a tag identifier sent by a passive terminal, the reader sends the tag identifier to the server through a UPF network element. The server sends a seventh broadcast message to the reader through the UPF network element, where the seventh broadcast message includes the tag identifier obtained by the server and to-be-written information, and the seventh broadcast message indicates the passive terminal to write the to-be-written information into a storage area of the passive terminal. After receiving the seventh broadcast message, the reader sends the seventh broadcast message to the M passive terminals. After receiving the seventh broadcast message, each of the M passive terminals performs matching on a tag identifier of the passive terminal based on the tag identifier in the seventh broadcast message; and if the matching succeeds, writes the to-be-written information into a storage area; or if the matching fails, does not perform any processing. When the matching succeeds, if the passive terminal successfully writes the to-be-written information into the storage area, the passive terminal sends a write success message to the reader; otherwise, the passive terminal sends a write failure message to the reader. After receiving the write success message or the write failure message sent by the passive terminal, the reader sends the write success message or the write failure message to the server through the UPF network element, and waits for a tag identifier sent by another passive terminal (other than the passive terminal that has sent the tag identifier).

When the specified operation is the batch read operation, it may be understood that the reader sends an eighth broadcast message to the M passive terminals, where the eighth broadcast message indicates the passive terminal to send data information in a storage area of the passive terminal to the reader. After receiving the eighth broadcast message, the M passive terminals respectively send data information in respective storage areas to the reader. After receiving the data information sent by the M passive terminals, the reader sends the M pieces of data information to the server in batches through a UPF network element.

When the specified operation is the batch write operation, it may be understood that the reader sends a ninth broadcast message to the M passive terminals, where the ninth broadcast message includes to-be-written information, and the ninth broadcast message indicates the passive terminal to write the to-be-written information into a storage area of the passive terminal. After receiving the fifth broadcast message, the M passive terminals respectively write the to-be-written information into respective storage areas. If the passive terminal successfully writes the to-be-written information into the storage area, the passive terminal sends a write success message to the reader; otherwise, the passive terminal sends a write failure message to the reader. After receiving write success messages or write failure messages sent by the M passive terminals, the reader sends the M write success messages or write failure messages to the server in batches through the UPF network element.

When the specified operation is the positioning operation, it may be understood that the reader sends a tenth broadcast message to the M passive terminals, where the tenth broadcast message indicates the passive terminal to send location information to the reader. After receiving the tenth broadcast message, the M passive terminals respectively send respective corresponding location information to the reader. After receiving location information sent by a passive terminal, the reader sends the location information to the server through a UPF network element, and waits for location information sent by another passive terminal (other than the passive terminal that has sent the location information).

When the specified operation is the disable operation, it may be understood that the reader sends an eleventh broadcast message to the M passive terminals, where the eleventh broadcast message indicates the passive terminal to invalidate a tag identifier in the passive terminal. After receiving the eleventh broadcast message, the M passive terminals respectively perform disable processing on respective tag identifiers, to invalidate the tag identifiers. If the passive terminal successfully disables the tag identifier, the passive terminal sends a disable success message to the reader; otherwise, the passive terminal sends a disable failure message to the reader. After receiving a disable success message or a disable failure message sent by a passive terminal, the reader sends the disable success message or the disable failure message to the server through a UPF network element, and waits for a disable success message or a disable failure message sent by another passive terminal (other than the passive terminal that has sent the disable success message or the disable failure message).

When the specified operation is the tag information obtaining operation, it may be understood that the reader sends a twelfth broadcast message to the M passive terminals, where the twelfth broadcast message indicates the passive terminal to send tag information to the reader, and the tag information may be at least one of the following: a tag identifier of the passive terminal, data information stored in a storage area of the passive terminal, and location information of the passive terminal. After receiving the twelfth broadcast message, the M passive terminals respectively send respective corresponding tag information to the reader. After receiving tag information sent by a passive terminal, the reader sends the tag information to the server through a UPF network element, and waits for tag information sent by another passive terminal (other than the passive terminal that has sent the tag information).

It should be understood that the specified operation in Table 1, such as the inventory operation, the common read operation, the common write operation, the batch read operation, the batch write operation, the positioning operation, the disable operation, and the tag information obtaining operation, has not only a literal meaning, but specifically indicates an execution action of the reader. For ease of understanding and reading the specification, in embodiments of this application, the inventory operation, the common read operation, the common write operation, the batch read operation, the batch write operation, the positioning operation, the disable operation, the tag information obtaining operation, and the like are directly used, but an execution action of the reader corresponding to each operation is not directly used.

In a possible implementation, that the TMF network element determines, based on the preset service type and the eighth mapping relationship, the preset operation corresponding to the preset service type may be implemented by using the following steps: The TMF network element searches the eighth mapping relationship for the preset service type; and if a specified service type that is the same as the preset service type exists in the eighth mapping relationship, uses a specified operation corresponding to the specified service type as the preset operation.

In this embodiment of this application, the preset service type may include any one of the following: an inventory type, a common read type, a common write type, a batch read type, a batch write type, a positioning type, a disable type, a tag information obtaining type, and the like. Correspondingly, the preset operation may include any one of the following: an inventory operation, a common read operation, a common write operation, a batch read operation, a batch write operation, a positioning operation, a disable operation, a tag information obtaining operation, and the like.

An example in which the preset service type is the inventory type is used for description. The TMF network element searches the eighth mapping relationship shown in Table 1 for the inventory type. Because a specified service type that is the same as the inventory type exists in the eighth mapping relationship, a specified operation (that is, the inventory operation) corresponding to the specified service type is used as the preset operation. Finally, the inventory operation is used as the second indication information.

Implementation a3: The TMF network element determines, based on the preset service type and an eighth mapping relationship, a preset operation corresponding to the preset service type, and uses the preset service type and the preset operation as the second indication information. The eighth mapping relationship includes a mapping relationship between a specified service type and a specified operation. It should be understood that the eighth mapping relationship may be stored in the TMF network element, or may be stored in another device that can be accessed by the TMF network element. This is not limited herein.

In a possible implementation, that the TMF network element determines, based on the preset service type and the eighth mapping relationship, the preset operation corresponding to the preset service type may be implemented by using the following steps: The TMF network element searches the eighth mapping relationship for the preset service type; and if a specified service type that is the same as the preset service type exists in the eighth mapping relationship, uses a specified operation corresponding to the specified service type as the preset operation.

The preset service type may include any one of the following: an inventory type, a common read type, a common write type, a batch read type, a batch write type, a positioning type, a disable type, a tag information obtaining type, and the like. Therefore, the preset operation may correspondingly include any one of the following: an inventory operation, a common read operation, a common write operation, a batch read operation, a batch write operation, a positioning operation, a disable operation, a tag information obtaining operation, and the like.

An example in which the preset service type is the inventory type is used for description. The TMF network element searches the eighth mapping relationship shown in Table 1 for the inventory type. Because a specified service type that is the same as the inventory type exists in the eighth mapping relationship, a specified operation (that is, the inventory operation) corresponding to the specified service type is used as the preset operation. Finally, the inventory type and the inventory operation are used as the second indication information.

The third message further includes a session tag. The session tag is generated by the TMF network element based on the preset service type, and the session tag may be used to identify a first tunnel.

The third message further includes the server identifier and the address and the port number of the server, and the server identifier and the address and the port number of the server are obtained from the second message.

S304: The TMF network element sends the third message to the SMF network element. The third message indicates the SMF to establish a P-IoT session.

S305: The SMF network element sends a fourth message to the UPF network element, where the fourth message may indicate the UPF network element to send CN tunnel information. Alternatively, the fourth message may indicate the UPF network element to send CN tunnel information and an address and a port number of the UPF network element.

S306: The UPF network element sends the CN tunnel information to the SMF network element.

In a possible implementation, if the fourth message indicates the UPF network element to send the CN tunnel information, the UPF network element sends the CN tunnel information to the SMF network element after receiving the fourth message sent by the SMF network element.

In another possible implementation, if the fourth message indicates the UPF network element to send the CN tunnel information and the address and the port number of the UPF network element, the UPF network element sends the CN tunnel information and the address and the port number of the UPF network element to the SMF network element after receiving the fourth message sent by the SMF network element.

In this embodiment of this application, the CN tunnel information includes a tunnel endpoint identifier (tunnel endpoint identifier, TEID) and a transport layer address. The transport layer address may be address information of the UPF.

S307: The SMF network element determines a first tunnel identifier based on at least the CN tunnel information.

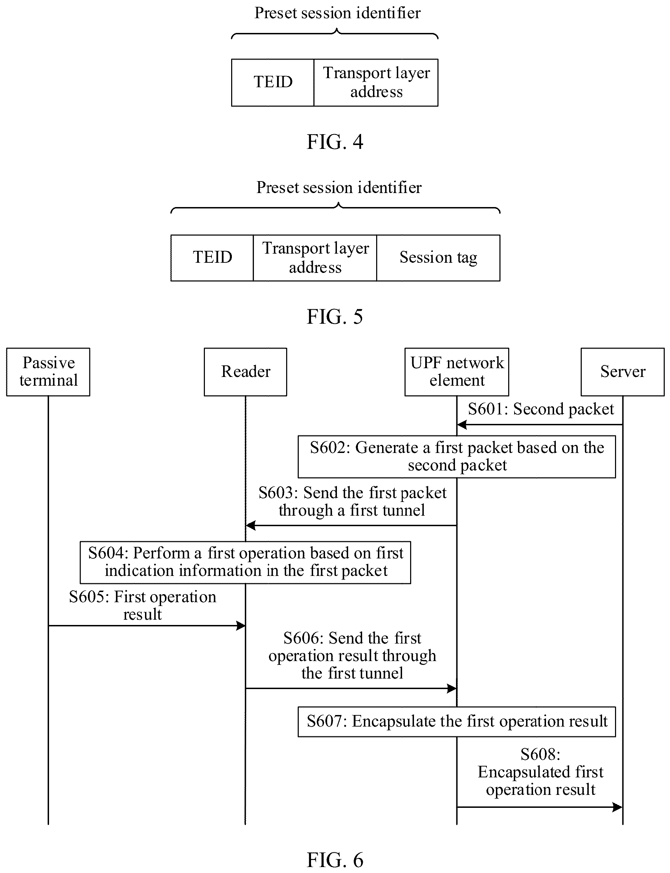

In a possible implementation, the SMF network element may determine the first tunnel identifier in the following two possible implementations. The specific implementations are as follows:
In a first possible implementation, the SMF network element may randomly generate a sequence or a number, and use the random sequence or the random number as the first tunnel identifier.
In a second possible implementation, the SMF network element may determine the first tunnel identifier based on the TEID and the transport layer address in the CN tunnel information. For example, as shown in FIG. 4, the TEID and the transport layer address are spliced to form the first tunnel identifier.
In a third possible implementation, the SMF network element may determine the first tunnel identifier based on the TEID and the transport layer address in the CN tunnel information and the session tag. For example, as shown in FIG. 5, the TEID, the transport layer address, and the session tag are spliced to form the first tunnel identifier.

S308: The SMF network element sends a first message to an AMF network element.

In a possible implementation, the first message includes the CN tunnel information and the second indication information, the second indication information indicates the reader to set the mapping relationship, and the mapping relationship is used by the reader to determine the first operation.

The first message may further include the first tunnel identifier.

S309: The AMF network element sends the first message to the reader.

S310: The reader determines AN tunnel information based on the CN tunnel information in the first message.

In this embodiment of this application, the AN tunnel information includes an endpoint identifier (endpoint identifier) of the reader and a corresponding quality of service flow identifier (QoS flow identifier, QFI).

The reader establishes a ninth mapping relationship between the CN tunnel information, the AN tunnel information, and the first tunnel identifier. It should be understood that the ninth mapping relationship may be stored in the reader, or may be stored in another device that can be accessed by the reader. This is not limited herein. After the reader establishes the ninth mapping relationship, when the reader uses the first tunnel, the first tunnel may be determined based on the ninth mapping relationship, and the first tunnel is used for data transmission.

S311: The reader sends the AN tunnel information to the AMF network element.

S312: The reader sets the mapping relationship based on at least the second indication information in the first message.

In a possible implementation, the reader may set the mapping relationship in the following three possible implementations. The specific implementations may be as follows:
Implementation b1: When the second indication information includes the preset operation, the reader establishes a first mapping relationship between the first tunnel identifier and the preset operation.
Implementation b2: When the second indication information includes the preset service type, the reader establishes a second mapping relationship between the first tunnel identifier and the preset service type.
Implementation b3: When the second indication information includes the preset service type and the preset operation, the reader establishes a third mapping relationship between the preset service type and the preset operation.

In this application, the first mapping relationship, the second mapping relationship, and the third mapping relationship that are generated in the foregoing three implementations may be stored in the reader, or may be stored in another device that can be accessed by the reader. This is not limited herein.

It should be understood that Implementation b1 to Implementation b3 may be used separately, or may be used in combination. This is not limited herein.

An execution sequence between S312, and S310 and S311 is not limited.

S313: The AMF network element sends the AN tunnel information to the SMF network element.

S314: The SMF network element sends a fifth message to the UPF network element.

In this embodiment of this application, the fifth message may include the following two types of possible content.

In a first possible implementation, the fifth message includes the AN tunnel information, the first tunnel identifier, and at least one of the following: the address and the port number of the server, and the second indication information. The second indication information may include the following three possible implementations: The second indication information may include the preset service type, or the second indication information may include the preset operation, or the second indication information may include the preset service type and the preset operation.

After receiving the fifth message, the UPF network element stores the AN tunnel information and the first tunnel identifier in the fifth message. It should be understood that, after the reader receives the CN tunnel information and the UPF network element receives the AN tunnel information, establishment of the first tunnel between the reader and the UPF network element is completed. The UPF network element may determine the first tunnel by using the stored first tunnel identifier.

The UPF network element may further establish the ninth mapping relationship between the CN tunnel information, the AN tunnel information, and the first tunnel identifier. It should be understood that the ninth mapping relationship may be stored in the reader, or may be stored in another device that can be accessed by the reader. This is not limited herein. After the UPF network element establishes the ninth mapping relationship, when the UPF network element uses the first tunnel, the first tunnel may be determined based on the ninth mapping relationship, and the first tunnel is used for data transmission.

In addition, that the UPF network element further determines the mapping relationship based on the fifth message may include the following possible implementations.

Implementation c1: When the fifth message includes the address and the port number of the server and the second indication information, and the second indication information includes the preset service type, the UPF network element first generates preset four-tuple information based on the address and the port number of the server and the address and the port number of the UPF network element; and then establishes a fourth mapping relationship between the preset four-tuple information and the preset service type. The address of the UPF network element is a public network address. It should be understood that the fourth mapping relationship may be stored in the UPF network element, or may be stored in another device that can be accessed by the UPF network element. This is not limited herein.

For example, it is assumed that the address of the server is 192.169.10.0, and the address of the UPF network element is 192.169.10.1. The fourth mapping relationship may be shown in Table 2.

**Table 2**

| Preset four-tuple information | Preset service type |
|---|---|
| (192.169.10.0:1, 192.169.10.1:1) | Inventory type |
| (192.169.10.0:2, 192.169.10.1:2) | Common read type |
| (192.169.10.0:3, 192.169.10.1:3) | Common write type |
| (192.169.10.0:4, 192.169.10.1:4) | Batch read type |
| (192.169.10.0:5, 192.169.10.1:5) | Batch write type |
| (192.169.10.0:6, 192.169.10.1:6) | Positioning type |
| (192.169.10.0:7, 192.169.10.1:7) | Disable type |
| (192.169.10.0:8, 192.169.10.1:8) | Tag information obtaining type |

An example in which the preset four-tuple information in Table 2 is (192.169.10.0:1, 192.169.10.1:1) is used for description. The address of the server is 192.169.10.0, the port number of the server is 1, the address of the UPF network element is 192.169.10.1, the port number of the UPF network element is 1, and a preset service type corresponding to the preset four-tuple information is the inventory type. For other preset four-tuple information in Table 2, a method for determining a preset service type is similar to the foregoing method, and details are not described below.

Implementation c2: When the fifth message includes the second indication information, and the second indication information includes the preset service type and the preset operation, the UPF network element establishes a fifth mapping relationship between the preset service type and the preset operation. It should be understood that the fifth mapping relationship may be stored in the UPF network element, or may be stored in another device that can be accessed by the UPF network element. This is not limited herein.

The mapping relationship between the preset service type and the preset operation is shown in Table 3.

**Table 3**

| Preset service type | Preset operation |
|---|---|
| Inventory type | Inventory operation |
| Common read type | Common read operation |
| Common write type | Common write operation |
| Batch read type | Batch read operation |
| Batch write type | Batch write operation |
| Positioning type | Positioning operation |
| Disable type | Disable operation |
| Tag information obtaining type | Tag information obtaining operation |

An example in which the preset service type is the inventory type in Table 3 is used for description, and a preset operation corresponding to the inventory type is the inventory operation. When the preset service type is another type (other than the inventory type), a method for determining the preset operation is similar to the foregoing method, and details are not described below.

Implementation c3: When the fifth message includes the address and the port number of the server and the second indication information, and the second indication information includes the preset operation, the UPF network element first generates preset four-tuple information based on the address and the port number of the server and the address and the port number of the UPF network element; and then establishes a sixth mapping relationship between the preset four-tuple information and the preset operation. The address of the UPF network element is a public network address. It should be understood that the sixth mapping relationship may be stored in the UPF network element, or may be stored in another device that can be accessed by the UPF network element. This is not limited herein.

For example, it is assumed that the address of the server is 192.169.10.0, and the address of the UPF network element is 192.169.10.1. The fourth mapping relationship may be shown in Table 4.

**Table 4**

| Preset four-tuple information | Preset operation |
|---|---|
| (192.169.10.0:1, 192.169.10.1:1) | Inventory operation |
| (192.169.10.0:2, 192.169.10.1:2) | Common read operation |
| (192.169.10.0:3, 192.169.10.1:3) | Common write operation |
| (192.169.10.0:4, 192.169.10.1:4) | Batch read operation |
| (192.169.10.0:5, 192.169.10.1:5) | Batch write operation |
| (192.169.10.0:6, 192.169.10.1:6) | Positioning operation |
| (192.169.10.0:7, 192.169.10.1:7) | Disable operation |
| (192.169.10.0:8, 192.169.10.1:8) | Tag information obtaining operation |

An example in which the preset four-tuple information in Table 4 is (192.169.10.0:1, 192.169.10.1:1) is used for description. The address of the server is 192.169.10.0, the port number of the server is 1, the address of the UPF network element is 192.169.10.1, the port number of the UPF network element is 1, and a preset operation corresponding to the preset four-tuple information is the inventory operation. For other preset four-tuple information in Table 4, a method for determining a preset operation is similar to the foregoing method, and details are not described below.

Implementation c4: When the fifth message includes the second indication information, and the second indication information includes the preset service type, the UPF network element establishes a seventh mapping relationship between the preset service type and the first tunnel identifier. It should be understood that the seventh mapping relationship may be stored in the UPF network element, or may be stored in another device that can be accessed by the UPF network element. This is not limited herein.

The preset service type may include any one of the following: an inventory type, a common read type, a common write type, a batch read type, a batch write type, a positioning type, a disable type, and a tag information obtaining type.

If the first tunnel is used to transmit a first packet of the inventory type, the preset service type is the inventory type, and the inventory type is associated with the first tunnel identifier.

It should be understood that Implementation c1 to Implementation c4 may be used separately, or may be used in combination. This is not limited herein.

In a second possible implementation, the fifth message includes the AN tunnel information, the first tunnel identifier, and at least one of the following mapping relationships: a fourth mapping relationship, a fifth mapping relationship, a sixth mapping relationship, and a seventh mapping relationship.

After receiving the fifth message, the UPF network element stores the AN tunnel information and the first tunnel identifier in the fifth message. It should be understood that, after the reader receives the CN tunnel information and the UPF network element receives the AN tunnel information, establishment of the first tunnel between the reader and the UPF network element is completed. The UPF network element may determine the first tunnel by using the stored first tunnel identifier.

The UPF network element may further establish the ninth mapping relationship between the CN tunnel information, the AN tunnel information, and the first tunnel identifier. It should be understood that the ninth mapping relationship may be stored in the reader, or may be stored in another device that can be accessed by the reader. This is not limited herein. After the UPF network element establishes the ninth mapping relationship, when the UPF network element uses the first tunnel, the first tunnel may be determined based on the ninth mapping relationship, and the first tunnel is used for data transmission.

In a possible implementation, the fourth mapping relationship may be set in the following manner: The SMF network element first generates preset four-tuple information based on the address and the port number of the server and the address and the port number of the UPF network element; and then establishes the fourth mapping relationship between the preset four-tuple information and the preset service type in the second indication information. The address of the UPF network element is a public network address.

In a possible implementation, the fifth mapping relationship may be set in the following manner: The SMF network element establishes the fifth mapping relationship between the preset service type and the preset operation in the second indication information.

In a possible implementation, the sixth mapping relationship may be set in the following manner: The SMF network element first generates preset four-tuple information based on the address and the port number of the server and the address and the port number of the UPF network element; and then establishes the sixth mapping relationship between the preset four-tuple information and the preset operation in the second indication information. The address of the UPF network element is a public network address.

In a possible implementation, the seventh mapping relationship may be set in the following manner: The SMF network element establishes the seventh mapping relationship between the preset service type in the second indication information and the first tunnel identifier.

In this embodiment of this application, when the second indication information includes the preset service type, the fifth message includes the AN tunnel information, the first tunnel identifier, and the fourth mapping relationship, or the fifth message includes the AN tunnel information, the first tunnel identifier, and the seventh mapping relationship.

When the second indication information includes the preset service type and the preset operation, the fifth message includes the AN tunnel information, the first tunnel identifier, and the fifth mapping relationship.

When the second indication information includes the preset operation, the fifth message includes the AN tunnel information, the first tunnel identifier, and the sixth mapping relationship.

S315: The UPF network element sends sixth information to the SMF network element.

In a possible implementation, the sixth message includes the first tunnel identifier, and the address and the port number of the UPF network element.

S316: The SMF network element sends the sixth information to the TMF network element.

S317: The TMF network element sends the sixth information to the NEF network element.

S318: The NEF network element sends the sixth information to the server.

In this application, a second tunnel further needs to be established between the reader and the UPF network element. The second tunnel is used to transmit only a second packet. A service type of the second packet is different from a service type of the first packet. A method for establishing the second tunnel is similar to the method for establishing the first tunnel. This is not limited herein, and details are not described below.

In this embodiment of this application, a plurality of tunnels are established between the reader and the UPF network element, and service types of different packets transmitted on all the tunnels are different, so that packet processing efficiency of the reader can be effectively improved.

An embodiment of this application provides a communication method, used to transmit a first packet between a passive terminal and a server. The method may be applied to the communication system shown in FIG. 2. The following specifically describes a procedure of the method with reference to a flowchart shown in FIG. 6.

S601: A server sends a second packet to a UPF network element.

In a possible implementation, the second packet includes four-tuple information, and the four-tuple information includes an address and a port number of the server, and an address and a port number of the UPF network element.

Optionally, the second packet may further include filter information, and the filter information may include at least one of the following: a network identifier, a user identifier, a tag identifier of at least one first passive terminal, and a tag identifier range. In this embodiment of this application, the filter information may also be referred to as mask information.

The network identifier in the second packet is described by using an example. The network identifier may be a public land mobile network address (public land mobile network ID, PLMN ID).

The user identifier in the second packet is described by using an example. The user identifier may be an AF identifier.

The tag identifier of the at least one first passive terminal in the second packet is described by using an example. The second packet includes a tag identifier 1 and a tag identifier 2.

The tag identifier range in the second packet is described by using an example. The second packet includes a tag identifier 1 to a tag identifier 5.

Optionally, the second packet may further include to-be-processed information. For example, when the server performs a write operation on the passive terminal, the to-be-processed information may be to-be-written information, and the passive terminal may write the to-be-written information into a storage area of the passive terminal. When the server performs a read operation on the passive terminal, the to-be-processed information may be storage area index information, and the passive terminal may obtain data information from a storage area corresponding to the storage area index information. When the server performs a positioning operation on the passive terminal, the to-be-processed information may be range information, and the passive terminal determines whether the passive terminal is within a range determined based on the range information.

S602: The UPF network element generates a first packet based on the second packet.

In a possible implementation, the first packet includes first indication information, the first indication information is determined based on the four-tuple information, and the first indication information indicates a reader to perform a first operation.

Optionally, when the second packet includes the tag identifier of the at least one first passive terminal, the first packet may further include the tag identifier of the at least one first passive terminal.

Optionally, when the second packet includes the to-be-written information, the first packet may further include the to-be-written information.

In a possible implementation, the UPF network element may determine the first indication information in the following four possible implementations. The specific implementations may be as follows:

Implementation d1: When the UPF network element stores a fourth mapping relationship, the UPF network element first determines, based on the four-tuple information and the fourth mapping relationship, a first service type corresponding to the four-tuple information, and then generates the first indication information based on the first service type. The fourth mapping relationship includes a mapping relationship between preset four-tuple information and a preset service type.

Further explanation is as follows: When the UPF network element stores the fourth mapping relationship, the UPF network element searches the fourth mapping relationship for the four-tuple information, and if preset four-tuple information that is the same as the four-tuple information exists in the fourth mapping relationship, uses a preset service type corresponding to the preset four-tuple information as the first service type, and generates the first indication information based on the first service type.

Implementation d2: When the UPF network element stores a fourth mapping relationship and a fifth mapping relationship, the UPF network element first determines, based on the four-tuple information and the fourth mapping relationship, a first service type corresponding to the four-tuple information; then determines, based on the fifth mapping relationship, a first operation corresponding to the first service type; and finally generates the first indication information based on the first operation. The fourth mapping relationship includes a mapping relationship between preset four-tuple information and a preset service type, and the fifth mapping relationship includes a mapping relationship between the preset service type and a preset operation.

Further explanation is as follows: When the UPF network element stores the fourth mapping relationship and the fifth mapping relationship, the UPF network element searches the fourth mapping relationship for the four-tuple information, and if preset four-tuple information that is the same as the four-tuple information exists in the fourth mapping relationship, uses a preset service type corresponding to the preset four-tuple information as the first service type. The UPF network element searches the fifth mapping relationship for the first service type, and if a preset service type that is the same as the first service type exists in the fifth mapping relationship, uses a preset operation corresponding to the preset service type as the first operation, and generates the first indication information based on the first operation.

Implementation d3: When the UPF network element stores a sixth mapping relationship, the UPF network element determines, based on the four-tuple information and the sixth mapping relationship, a first operation corresponding to the four-tuple information, and then generates the first indication information based on the first operation. The sixth mapping relationship includes a mapping relationship between preset four-tuple information and a preset operation.

Further explanation is as follows: When the UPF network element stores the sixth mapping relationship, the UPF network element searches the sixth mapping relationship for the four-tuple information, and if preset four-tuple information that is the same as the four-tuple information exists in the sixth mapping relationship, uses a preset operation corresponding to the preset four-tuple information as the first operation, and generates the first indication information based on the first operation.

Implementation d4: When the UPF network element stores a fourth mapping relationship and a seventh mapping relationship, the UPF network element first determines, based on the four-tuple information and the fourth mapping relationship, a first service type corresponding to the four-tuple information; then determines, based on the seventh mapping relationship, a first session identifier corresponding to the first service type; and finally generates the first indication information based on the first session identifier. The fourth mapping relationship includes a mapping relationship between preset four-tuple information and a preset service type, and the seventh mapping relationship includes a mapping relationship between the preset service type and a first tunnel identifier.

Further explanation is as follows: When the UPF network element stores the fourth mapping relationship and the seventh mapping relationship, the UPF network element searches the fourth mapping relationship for the four-tuple information, and if preset four-tuple information that is the same as the four-tuple information exists in the fourth mapping relationship, uses a preset service type corresponding to the preset four-tuple information as the first service type. The UPF network element searches the seventh mapping relationship for the first service type, and if a preset service type that is the same as the first service type exists in the seventh mapping relationship, uses a first tunnel identifier corresponding to the preset service type as the first session identifier, and generates the first indication information based on the first session identifier.

S603: The UPF network element sends the first packet to the reader through a first tunnel.

In a possible implementation, before sending the first packet to the reader through the first tunnel, the UPF network element further needs to determine, from a plurality of tunnels based on the second packet, the first tunnel used to transmit the first packet.

Because a plurality of tunnels are established between the UPF network element and the reader, and the UPF network element stores a tunnel identifier corresponding to each tunnel, for example, a first tunnel identifier corresponding to the first tunnel and a second tunnel identifier corresponding to a second tunnel, the UPF network element may select the first tunnel from the plurality of tunnels based on the first tunnel identifier corresponding to the first tunnel.

The UPF network element may select the first tunnel from the plurality of tunnels by using the following method: The UPF network element first determines, based on the four-tuple information and the fourth mapping relationship, the first service type corresponding to the four-tuple information; then determines, based on the seventh mapping relationship, the first session identifier corresponding to the first service type; and finally determines, from the plurality of tunnels, the first tunnel corresponding to the first session identifier.

S604: The reader performs the first operation based on the first indication information in the first packet.

In a possible implementation, the reader may perform the first operation in the following four possible implementations. The specific implementations are as follows:
Implementation e1: When the first indication information includes the first service type and the reader stores a third mapping relationship, the reader determines, based on the first service type and the third mapping relationship, the first operation corresponding to the first service type, and performs the first operation. The third mapping relationship includes a mapping relationship between a preset service type and a preset operation.

Further explanation is as follows: When the first indication information includes the first service type, and the reader stores the third mapping relationship, the reader searches the third mapping relationship for the first service type, and if a preset service type that is the same as the first service type exists in the third mapping relationship, uses a preset operation corresponding to the preset service type as the first operation, and performs the first operation.

Implementation e2: When the first indication information includes the first operation, the reader obtains the first operation from the first indication information, and performs the first operation.

Implementation e3: When the first indication information includes the first session identifier and the reader stores a first mapping relationship, the reader determines, based on the first session identifier and the first mapping relationship, the first operation corresponding to the first session identifier, and performs the first operation. The first mapping relationship includes a mapping relationship between a first tunnel identifier and a preset operation.

Further explanation is as follows: When the first indication information includes the first session identifier and the reader stores the first mapping relationship, the reader searches the first mapping relationship for the first session identifier, and if a first tunnel identifier that is the same as the first session identifier exists in the first mapping relationship, uses a preset operation corresponding to the first tunnel identifier as the first operation, and performs the first operation.

Implementation e4: When the first indication information includes the first session identifier, and the reader stores a second mapping relationship and a third mapping relationship, the reader first determines, based on the first session identifier and the second mapping relationship, the first service type corresponding to the first session identifier, and then determines, based on the first service type and the third mapping relationship, the first operation corresponding to the first service type. The second mapping relationship includes a mapping relationship between a first tunnel identifier and a preset service type, and the third mapping relationship includes a mapping relationship between the preset service type and a preset operation.

Further explanation is as follows: When the first indication information includes the first session identifier, and the reader stores the second mapping relationship and the third mapping relationship, the reader searches the second mapping relationship for the first session identifier, and if a first tunnel identifier that is the same as the first session identifier exists in the second mapping relationship, uses a preset service type corresponding to the first tunnel identifier as the first service type. The reader searches the third mapping relationship for the first service type, and if a preset service type that is the same as the first service type exists in the third mapping relationship, uses a preset operation corresponding to the preset service type as the first operation, and performs the first operation.

The first operation may be any one of the following: an inventory operation, a common read operation, a common write operation, a batch read operation, a batch write operation, a positioning operation, a disable operation, a tag information obtaining operation, and the like.

In this embodiment of this application, the reader does not store a specific execution manner of the first operation, but directly determines, based on the first indication information in the first packet, the to-be-performed first operation, and performs the first operation, so that data transmission security can be effectively ensured.

S605: The passive terminal sends a first operation result to the reader.

In a possible implementation, it is assumed that a signal coverage area of the reader includes M passive terminals, and the first packet does not include the tag identifier of at least one first passive terminal. That the reader performs the first operation and the passive terminal sends the first operation result to the reader is described below in detail.

If the first operation is the inventory operation, the reader sends a first broadcast message to the M passive terminals, where the first broadcast message indicates the passive terminal to send a tag identifier to the reader. After receiving the first broadcast message, the M passive terminals respectively send respective corresponding tag identifiers to the reader. After receiving a tag identifier sent by a passive terminal, the reader sends the tag identifier to the UPF network element through the first tunnel, and then the UPF network element sends the tag identifier to the server. In addition, the reader waits for a tag identifier sent by another passive terminal (other than the passive terminal that has sent the tag identifier).

When the first operation is the inventory operation, the first operation is that the reader sends a first broadcast message to the M passive terminals, where the first broadcast message indicates the passive terminal to send a tag identifier to the reader. The first operation result is the tag identifier of the passive terminal.

If the first operation is the common read operation, the reader sends a second broadcast message to the M passive terminals, where the second broadcast message indicates the passive terminal to send data information in a storage area of the passive terminal to the reader. After receiving the second broadcast message, the M passive terminals respectively send data information in respective storage areas to the reader. After receiving a piece of data information sent by a passive terminal, the reader sends the data information to the UPF network element through the first tunnel, and then the UPF network element sends the data information to the server. In addition, the reader waits for data information sent by another passive terminal (other than the passive terminal that has sent the data information).

When the first operation is the common read operation, the first operation is that the reader sends a second broadcast message to the M passive terminals, where the second broadcast message indicates the passive terminal to send data information in a storage area of the passive terminal to the reader. The first operation result is the data information in the storage area of the passive terminal.

Alternatively, if the first operation is the common read operation, the reader sends a third broadcast message to the M passive terminals, where the third broadcast message indicates the passive terminal to send a tag identifier to the reader. After receiving the third broadcast message, the M passive terminals respectively send respective corresponding tag identifiers to the reader. After receiving a tag identifier sent by a passive terminal, the reader sends the tag identifier to the UPF network element through the first tunnel, and then the UPF network element sends the tag identifier to the server. In addition, the reader maintains a connection to the passive terminal that sends the tag identifier. The server sends a fourth broadcast message to the reader through the UPF network element and the first tunnel, where the fourth broadcast message includes the tag identifier obtained by the server, and the fourth broadcast message indicates the passive terminal to send data information in a storage area of the passive terminal to the reader. After receiving the fourth broadcast message, the reader sends the fourth broadcast message to the passive terminal for which the connection is maintained. After receiving the fourth broadcast message, the passive terminal sends the data information in the storage area to the reader. After receiving the data information sent by the passive terminal, the reader sends the data information to the UPF network element through the first tunnel, and then the UPF network element sends the data information to the server. In addition, the reader cancels the connection to the passive terminal, and waits for a tag identifier sent by another passive terminal (other than the passive terminal that has sent the tag identifier).

When the first operation is the common read operation, the first operation is that the reader sends a third broadcast message and a fourth broadcast message to the M passive terminals, where the third broadcast message indicates the passive terminal to send a tag identifier to the reader, the fourth broadcast message includes the tag identifier obtained by the server, and the fourth broadcast message indicates the passive terminal to send data information in a storage area of the passive terminal to the reader. The first operation result is the data information in the storage area of the passive terminal.

Alternatively, if the first operation is the common read operation, the reader sends a third broadcast message to the M passive terminals, where the third broadcast message indicates the passive terminal to send a tag identifier to the reader. After receiving the third broadcast message, the M passive terminals respectively send respective corresponding tag identifiers to the reader. After receiving a tag identifier sent by a passive terminal, the reader sends the tag identifier to the UPF network element through the first tunnel, and then the UPF network element sends the tag identifier to the server. The server sends a fourth broadcast message to the reader through the UPF network element and the first tunnel, where the fourth broadcast message includes the tag identifier obtained by the server, and the fourth broadcast message indicates the passive terminal to send data information in a storage area of the passive terminal to the reader. After receiving the fourth broadcast message, the reader sends the fourth broadcast message to the M passive terminals. After receiving the fourth broadcast message, each of the M passive terminals performs matching on a tag identifier of the passive terminal based on the tag identifier in the fourth broadcast message; and if the matching succeeds, sends data information in a storage area to the reader; or if the matching fails, does not perform any processing. After receiving data information sent by a passive terminal, the reader sends the data information to the UPF network element through the first tunnel, and then the UPF network element sends the data information to the server. In addition, the reader waits for a tag identifier sent by another passive terminal (other than the passive terminal that has sent the tag identifier).

When the first operation is the common read operation, the first operation is that the reader sends a third broadcast message and a fourth broadcast message to the M passive terminals, where the third broadcast message indicates the passive terminal to send a tag identifier to the reader, the fourth broadcast message includes the tag identifier obtained by the server, and the fourth broadcast message indicates the passive terminal to send data information in a storage area of the passive terminal to the reader. The first operation result is the data information in the storage area of the passive terminal.

If the first operation is the common write operation, the reader sends a fifth broadcast message to the M passive terminals, where the fifth broadcast message includes to-be-written information, and the fifth broadcast message indicates the passive terminal to write the to-be-written information into a storage area of the passive terminal. After receiving the fifth broadcast message, the M passive terminals respectively write the to-be-written information into respective storage areas. If the passive terminal successfully writes the to-be-written information into the storage area, the passive terminal sends a write success message to the reader; otherwise, the passive terminal sends a write failure message to the reader. After receiving a write success message or a write failure message sent by a passive terminal, the reader sends the write success message or the write failure message to the UPF network element through the first tunnel, and then the UPF network element sends the write success message or the write failure message to the server. In addition, the reader waits for a write success message or a write failure message sent by another passive terminal (other than the passive terminal that has sent the write success message or the write failure message).

When the first operation is the common write operation, the first operation is that the reader sends a fifth broadcast message to the M passive terminals, where the fifth broadcast message includes to-be-written information, and the fifth broadcast message indicates the passive terminal to write the to-be-written information into a storage area of the passive terminal. The first operation result is the write success message or the write failure message of the passive terminal.

Alternatively, if the first operation is the common write operation, the reader sends a sixth broadcast message to the M passive terminals, where the sixth broadcast message indicates the passive terminal to send a tag identifier to the reader. After receiving the sixth broadcast message, the M passive terminals respectively send respective corresponding tag identifiers to the reader. After receiving a tag identifier sent by a passive terminal, the reader sends the tag identifier to the UPF network element through the first tunnel, and then the UPF network element sends the tag identifier to the server. In addition, the reader maintains a connection to the passive terminal that sends the tag identifier. The server sends a seventh broadcast message to the reader through the UPF network element and the first tunnel, where the seventh broadcast message includes the tag identifier obtained by the server and to-be-written information, and the seventh broadcast message indicates the passive terminal to write the to-be-written information into a storage area of the passive terminal. After receiving the seventh broadcast message, the reader sends the seventh broadcast message to the passive terminal for which the connection is maintained. After receiving the seventh broadcast message, the passive terminal writes the to-be-written information into the storage area. If the passive terminal successfully writes the to-be-written information into the storage area, the passive terminal sends a write success message to the reader; otherwise, the passive terminal sends a write failure message to the reader. After receiving the write success message or the write failure message sent by the passive terminal, the reader sends the write success message or the write failure message to the UPF network element through the first tunnel, and then the UPF network element sends the write success message or the write failure message to the server. In addition, the reader cancels the connection to the passive terminal, and waits for a tag identifier sent by another passive terminal (other than the passive terminal that has sent the tag identifier).

When the first operation is the common write operation, the first operation is that the reader sends a sixth broadcast message and a seventh broadcast message to the M passive terminals, where the sixth broadcast message indicates the passive terminal to send a tag identifier to the reader, the seventh broadcast message includes the tag identifier obtained by the server and to-be-written information, and the seventh broadcast message indicates the passive terminal to write the to-be-written information into a storage area of the passive terminal. The first operation result is the write success message or the write failure message of the passive terminal.

Alternatively, if the first operation is the common write operation, the reader sends a sixth broadcast message to the M passive terminals, where the sixth broadcast message indicates the passive terminal to send a tag identifier to the reader. After receiving the sixth broadcast message, the M passive terminals respectively send respective corresponding tag identifiers to the reader. After receiving a tag identifier sent by a passive terminal, the reader sends the tag identifier to the UPF network element through the first tunnel, and then the UPF network element sends the tag identifier to the server. The server sends a seventh broadcast message to the reader through the UPF network element, where the seventh broadcast message includes the tag identifier obtained by the server and to-be-written information, and the seventh broadcast message indicates the passive terminal to write the to-be-written information into a storage area of the passive terminal. After receiving the seventh broadcast message, the reader sends the seventh broadcast message to the M passive terminals. After receiving the seventh broadcast message, each of the M passive terminals performs matching on a tag identifier of the passive terminal based on the tag identifier in the seventh broadcast message; and if the matching succeeds, writes the to-be-written information into a storage area; or if the matching fails, does not perform any processing. When the matching succeeds, if the passive terminal successfully writes the to-be-written information into the storage area, the passive terminal sends a write success message to the reader; otherwise, the passive terminal sends a write failure message to the reader. After receiving the write success message or the write failure message sent by the passive terminal, the reader sends the write success message or the write failure message to the UPF network element through the first tunnel, and then the UPF network element sends the write success message or the write failure message to the server. In addition, the reader waits for a tag identifier sent by another passive terminal (other than the passive terminal that has sent the tag identifier).

When the first operation is the common write operation, the first operation is that the reader sends a sixth broadcast message and a seventh broadcast message to the M passive terminals, where the sixth broadcast message indicates the passive terminal to send a tag identifier to the reader, the seventh broadcast message includes the tag identifier obtained by the server and to-be-written information, and the seventh broadcast message indicates the passive terminal to write the to-be-written information into a storage area of the passive terminal. The first operation result is the write success message or the write failure message of the passive terminal.

If the first operation is the batch read operation, the reader sends an eighth broadcast message to the M passive terminals, where the eighth broadcast message indicates the passive terminal to send data information in a storage area of the passive terminal to the reader. After receiving the eighth broadcast message, the M passive terminals respectively send data information in respective storage areas to the reader. After receiving the data information sent by the M passive terminals, the reader sends the M pieces of data information to the UPF network element in batches through the first tunnel, and then the UPF network element sends the data information to the server.

When the first operation is the batch read operation, the first operation is that the reader sends an eighth broadcast message to the M passive terminals, where the eighth broadcast message indicates the passive terminal to send data information in a storage area of the passive terminal to the reader. The first operation result is the data information in the storage area of the passive terminal.

If the first operation is the batch write operation, the reader sends a ninth broadcast message to the M passive terminals, where the ninth broadcast message includes to-be-written information, and the ninth broadcast message indicates the passive terminal to write the to-be-written information into a storage area of the passive terminal. After receiving the fifth broadcast message, the M passive terminals respectively write the to-be-written information into respective storage areas. If the passive terminal successfully writes the to-be-written information into the storage area, the passive terminal sends a write success message to the reader; otherwise, the passive terminal sends a write failure message to the reader. After receiving write success messages or write failure messages sent by the M passive terminals, the reader sends the M write success messages or write failure messages to the UPF network element in batches through the first tunnel, and then the UPF network element sends the write success messages or write failure messages to the server.

When the first operation is the batch write operation, the first operation is that the reader sends a ninth broadcast message to the M passive terminals, where the ninth broadcast message includes to-be-written information, and the ninth broadcast message indicates the passive terminal to write the to-be-written information into a storage area of the passive terminal. The first operation result is the write success message or the write failure message of the passive terminal.

If the first operation is the positioning operation, the reader sends a tenth broadcast message to the M passive terminals, where the tenth broadcast message indicates the passive terminal to send location information to the reader. After receiving the tenth broadcast message, the M passive terminals respectively send respective corresponding location information to the reader. After receiving a piece of location information sent by the M passive terminals, the reader sends the location information to the UPF network element through the first tunnel, and then the UPF network element sends the location information to the server. In addition, the reader waits for location information sent by another passive terminal (other than the passive terminal that has sent the location information).

When the first operation is the positioning operation, the first operation is that the reader sends a tenth broadcast message to the M passive terminals, where the tenth broadcast message indicates the passive terminal to send location information to the reader. The first operation result is the location information of the passive terminal.

If the first operation is the disable operation, the reader sends an eleventh broadcast message to the M passive terminals, where the eleventh broadcast message indicates the passive terminal to invalidate a tag identifier in the passive terminal. After receiving the eleventh broadcast message, the M passive terminals respectively perform disable processing on respective tag identifiers, to invalidate the tag identifiers. If the passive terminal successfully disables the tag identifier, the passive terminal sends a disable success message to the reader; otherwise, the passive terminal sends a disable failure message to the reader. After receiving a disable success message or a disable failure message sent by the M passive terminals, the reader sends the disable success message or the disable failure message to the UPF network element through the first tunnel, and then the UPF network element sends the disable success message or the disable failure message to the server. In addition, the reader waits for a disable success message or a disable failure message sent by another passive terminal (other than the passive terminal that has sent the disable success message or the disable failure message).

When the first operation is the disable operation, the first operation is that the reader sends an eleventh broadcast message to the M passive terminals, where the eleventh broadcast message indicates the passive terminal to invalidate a tag identifier in the passive terminal. The first operation result is the disable success message or the disable failure message of the passive terminal.

If the first operation is the tag information obtaining operation, the reader sends a twelfth broadcast message to the M passive terminals, where the twelfth broadcast message indicates the passive terminal to send tag information to the reader, and the tag information may be at least one of the following: a tag identifier of the passive terminal, data information stored in a storage area of the passive terminal, and location information of the passive terminal. After receiving the twelfth broadcast message, the M passive terminals respectively send respective corresponding tag information to the reader. After receiving a piece of tag information sent by a passive terminal, the reader sends the tag information to the UPF network element through the first tunnel, and then the UPF network element sends the tag information to the server. In addition, the reader waits for tag information sent by another passive terminal (other than the passive terminal that has sent the tag information).

When the first operation is the tag information obtaining operation, the first operation is that the reader sends an eighth broadcast message to the M passive terminals, where the twelfth broadcast message indicates the passive terminal to send tag information to the reader. The first operation result is the tag information of the passive terminal.

In another possible implementation, it is assumed that a signal coverage area of the reader includes M passive terminals, and the first packet includes filter information. An example in which the filter information includes the tag identifier of the at least one first passive terminal is used for description. That the reader performs the first operation is described below in detail.

If the first operation is the inventory operation, the reader sends a first broadcast message to the M passive terminals, where the second broadcast message includes the tag identifier of the at least one passive terminal, and the first broadcast message indicates the passive terminal to send the tag identifier to the reader. After receiving the first broadcast message, the M passive terminals respectively send respective corresponding tag identifiers to the reader. After receiving a tag identifier sent by a passive terminal, the reader sends the tag identifier to the UPF network element through the first tunnel, and then the UPF network element sends the tag identifier to the server. In addition, the reader waits for a tag identifier sent by another passive terminal (other than the passive terminal that has sent the tag identifier).

When the first operation is the inventory operation, the first operation is that the reader sends a first broadcast message to the M passive terminals, where the first broadcast message indicates the passive terminal to send a tag identifier to the reader. The first operation result is the tag identifier of the passive terminal.

In this embodiment of this application, through the inventory operation, the server may determine whether the at least one passive terminal is still within a radiation range of the reader, or may determine whether the at least one passive terminal fails.

If the first operation is the common read operation, the reader sends a second broadcast message to the M passive terminals, where the second broadcast message includes the tag identifier of the at least one passive terminal, and the second broadcast message indicates the passive terminal to send data information in a storage area of the passive terminal to the reader. For any passive terminal in the M passive terminals, after receiving the second broadcast message, the passive terminal matches a tag identifier of the passive terminal with the tag identifier of the at least one passive terminal in the second broadcast message; and if the matching succeeds, the passive terminal sends data information in a storage area to the reader; or if the matching fails, the passive terminal does not perform any processing. After receiving a piece of data information sent by a passive terminal, the reader sends the data information to the UPF network element through the first tunnel, and then the UPF network element sends the data information to the server. In addition, the reader waits for data information sent by another passive terminal (other than the passive terminal that has sent the data information).

When the first operation is the common read operation, the first operation is that the reader sends a second broadcast message to the M passive terminals, where the second broadcast message includes the tag identifier of the at least one passive terminal, and the second broadcast message indicates the passive terminal to send data information in a storage area of the passive terminal to the reader. The first operation result is the data information in the storage area of the passive terminal.

It should be understood that, in this embodiment of this application, if the tag identifier of the passive terminal is in the tag identifier of the at least one passive terminal in the second broadcast message, the matching succeeds; or if the tag identifier of the passive terminal is not in the tag identifier of the at least one passive terminal in the second broadcast message, the matching fails.

Alternatively, if the first operation is the common read operation, the reader sends a third broadcast message to the M passive terminals, where the third broadcast message includes the tag identifier of the at least one passive terminal, and the third broadcast message indicates the passive terminal to send the tag identifier to the reader. For any passive terminal in the M passive terminals, after receiving the third broadcast message, the passive terminal matches a tag identifier of the passive terminal with the tag identifier of the at least one passive terminal in the third broadcast message; and if the matching succeeds, the passive terminal sends the tag identifier of the passive terminal to the reader; or if the matching fails, the passive terminal does not perform any processing. After receiving a tag identifier sent by a passive terminal, the reader sends the data information to the UPF network element through the first tunnel, and then the UPF network element sends the tag identifier to the server. In addition, the reader maintains a connection to the passive terminal that sends the tag identifier. The server sends a fourth broadcast message to the reader through the UPF network element and the first tunnel, where the fourth broadcast message includes the tag identifier obtained by the server, and the fourth broadcast message indicates the passive terminal to send data information in a storage area of the passive terminal to the reader. After receiving the fourth broadcast message, the reader sends the fourth broadcast message to the passive terminal for which the connection is maintained. After receiving the fourth broadcast message, the passive terminal sends the data information in the storage area to the reader. After receiving the data information sent by the passive terminal, the reader sends the data information to the UPF network element through the first tunnel, and then the UPF network element sends the data information to the server. In addition, the reader cancels the connection to the passive terminal, and waits for a tag identifier sent by another passive terminal (other than the passive terminal that has sent the tag identifier).

When the first operation is the common read operation, the first operation is that the reader sends a third broadcast message and a fourth broadcast message to the M passive terminals, where the third broadcast message includes the tag identifier of the at least one passive terminal, the third broadcast message indicates the passive terminal to send the tag identifier to the reader, the fourth broadcast message includes the tag identifier obtained by the server, and the fourth broadcast message indicates the passive terminal to send data information in a storage area of the passive terminal to the reader. The first operation result is the data information in the storage area of the passive terminal.

Alternatively, if the first operation is the common read operation, the reader sends a third broadcast message to the M passive terminals, where the third broadcast message includes the tag identifier of the at least one passive terminal, and the third broadcast message indicates the passive terminal to send the tag identifier to the reader. For any passive terminal in the M passive terminals, after receiving the third broadcast message, the passive terminal matches a tag identifier of the passive terminal with the tag identifier of the at least one passive terminal in the third broadcast message; and if the matching succeeds, the passive terminal sends the tag identifier of the passive terminal to the reader; or if the matching fails, the passive terminal does not perform any processing. After receiving a tag identifier sent by a passive terminal, the reader sends the tag identifier to the UPF network element through the first tunnel, and then the UPF network element sends the tag identifier to the server. The server sends a fourth broadcast message to the reader through the UPF network element and the first tunnel, where the fourth broadcast message includes the tag identifier obtained by the server, and the fourth broadcast message indicates the passive terminal to send data information in a storage area of the passive terminal to the reader. After receiving the fourth broadcast message, the reader sends the fourth broadcast message to the M passive terminals. After receiving the fourth broadcast message, each of the M passive terminals performs matching on a tag identifier of the passive terminal based on the tag identifier in the fourth broadcast message; and if the matching succeeds, sends data information in a storage area to the reader; or if the matching fails, does not perform any processing. After receiving data information sent by a passive terminal, the reader sends the data information to the UPF network element through the first tunnel, and then the UPF network element sends the data information to the server. In addition, the reader waits for a tag identifier sent by another passive terminal (other than the passive terminal that has sent the tag identifier).

When the first operation is the common read operation, the first operation is that the reader sends a third broadcast message and a fourth broadcast message to the M passive terminals, where the third broadcast message includes the tag identifier of the at least one passive terminal, the third broadcast message indicates the passive terminal to send the tag identifier to the reader, the fourth broadcast message includes the tag identifier obtained by the server, and the fourth broadcast message indicates the passive terminal to send data information in a storage area of the passive terminal to the reader. The first operation result is the data information in the storage area of the passive terminal.

If the first operation is the common write operation, the reader sends a fifth broadcast message to the M passive terminals, where the fifth broadcast message includes to-be-written information and the tag identifier of the at least one passive terminal, and the fifth broadcast message indicates the passive terminal to write the to-be-written information into a storage area of the passive terminal. For any passive terminal in the M passive terminals, after receiving the fifth broadcast message, the passive terminal matches a tag identifier of the passive terminal with the tag identifier of the at least one passive terminal in the second broadcast message; and if the matching succeeds, the passive terminal writes the to-be-written information into a storage area; or if the matching fails, the passive terminal does not perform any processing. When the matching succeeds, if the passive terminal successfully writes the to-be-written information into the storage area, the passive terminal sends a write success message to the reader; otherwise, the passive terminal sends a write failure message to the reader. After receiving a write success message or a write failure message sent by a passive terminal, the reader sends the write success message or the write failure message to the UPF network element through the first tunnel, and then the UPF network element sends the write success message or the write failure message to the server. In addition, the reader waits for a write success message or a write failure message sent by another passive terminal (other than the passive terminal that has sent the write success message or the write failure message).

When the first operation is the common write operation, the first operation is that the reader sends a fifth broadcast message to the M passive terminals, where the fifth broadcast message includes to-be-written information and the tag identifier of the at least one passive terminal, and the fifth broadcast message indicates the passive terminal to write the to-be-written information into a storage area of the passive terminal. The first operation result is the write success message or the write failure message of the passive terminal.

Alternatively, if the first operation is the common write operation, the reader sends a sixth broadcast message to the M passive terminals, where the sixth broadcast message includes the tag identifier of the at least one passive terminal, and the sixth broadcast message indicates the passive terminal to send the tag identifier to the reader. For any passive terminal in the M passive terminals, after receiving the sixth broadcast message, the passive terminal matches a tag identifier of the passive terminal with the tag identifier of the at least one passive terminal in the sixth broadcast message; and if the matching succeeds, the passive terminal sends the tag identifier of the passive terminal to the reader; or if the matching fails, the passive terminal does not perform any processing. After receiving a tag identifier sent by a passive terminal, the reader sends the tag identifier to the UPF network element through the first tunnel, and then the UPF network element sends the tag identifier to the server. In addition, the reader maintains a connection to the passive terminal that sends the tag identifier. The server sends a seventh broadcast message to the reader through the UPF network element and the first tunnel, where the seventh broadcast message includes the tag identifier obtained by the server and to-be-written information, and the seventh broadcast message indicates the passive terminal to write the to-be-written information into a storage area of the passive terminal. After receiving the seventh broadcast message, the reader sends the seventh broadcast message to the passive terminal for which the connection is maintained. After receiving the seventh broadcast message, the passive terminal writes the to-be-written information into the storage area. If the passive terminal successfully writes the to-be-written information into the storage area, the passive terminal sends a write success message to the reader; otherwise, the passive terminal sends a write failure message to the reader. After receiving the write success message or the write failure message sent by the passive terminal, the reader sends the write success message or the write failure message to the UPF network element through the first tunnel, and then the UPF network element sends the write success message or the write failure message to the server. In addition, the reader cancels the connection to the passive terminal, and waits for a tag identifier sent by another passive terminal (other than the passive terminal that has sent the tag identifier).

When the first operation is the common read operation, the first operation is that the reader sends a sixth broadcast message and a seventh broadcast message to the M passive terminals, where the sixth broadcast message includes the tag identifier of the at least one passive terminal, the sixth broadcast message indicates the passive terminal to send the tag identifier to the reader, the seventh broadcast message includes the tag identifier obtained by the server and to-be-written information, and the seventh broadcast message indicates the passive terminal to write the to-be-written information into a storage area of the passive terminal. The first operation result is the write success message or the write failure message of the passive terminal.

Alternatively, if the first operation is the common write operation, the reader sends a sixth broadcast message to the M passive terminals, where the sixth broadcast message includes the tag identifier of the at least one passive terminal, and the sixth broadcast message indicates the passive terminal to send the tag identifier to the reader. For any passive terminal in the M passive terminals, after receiving the sixth broadcast message, the passive terminal matches a tag identifier of the passive terminal with the tag identifier of the at least one passive terminal in the sixth broadcast message; and if the matching succeeds, the passive terminal sends the tag identifier of the passive terminal to the reader; or if the matching fails, the passive terminal does not perform any processing. After receiving a tag identifier sent by a passive terminal, the reader sends the tag identifier to the UPF network element through the first tunnel, and then the UPF network element sends the tag identifier to the server. The server sends a seventh broadcast message to the reader through the UPF network element, where the seventh broadcast message includes the tag identifier obtained by the server and to-be-written information, and the seventh broadcast message indicates the passive terminal to write the to-be-written information into a storage area of the passive terminal. After receiving the seventh broadcast message, the reader sends the seventh broadcast message to the M passive terminals. After receiving the seventh broadcast message, each of the M passive terminals performs matching on a tag identifier of the passive terminal based on the tag identifier in the seventh broadcast message; and if the matching succeeds, writes the to-be-written information into a storage area; or if the matching fails, does not perform any processing. When the matching succeeds, if the passive terminal successfully writes the to-be-written information into the storage area, the passive terminal sends a write success message to the reader; otherwise, the passive terminal sends a write failure message to the reader. After receiving the write success message or the write failure message sent by the passive terminal, the reader sends the write success message or the write failure message to the UPF network element through the first tunnel, and then the UPF network element sends the write success message or the write failure message to the server. In addition, the reader waits for a tag identifier sent by another passive terminal (other than the passive terminal that has sent the tag identifier).

When the first operation is the common write operation, the first operation is that the reader sends a sixth broadcast message and a seventh broadcast message to the M passive terminals, where the sixth broadcast message includes the tag identifier of the at least one passive terminal, the sixth broadcast message indicates the passive terminal to send the tag identifier to the reader, the seventh broadcast message includes the tag identifier obtained by the server and to-be-written information, and the seventh broadcast message indicates the passive terminal to write the to-be-written information into a storage area of the passive terminal. The first operation result is the write success message or the write failure message of the passive terminal.

If the first operation is the batch read operation, the reader sends an eighth broadcast message to the M passive terminals, where the eighth broadcast message includes the tag identifier of the at least one passive terminal, and the eighth broadcast message indicates the passive terminal to send data information in a storage area of the passive terminal to the reader. For any passive terminal in the M passive terminals, after receiving the eighth broadcast message, the passive terminal matches a tag identifier of the passive terminal with the tag identifier of the at least one passive terminal in the second broadcast message; and if the matching succeeds, the passive terminal sends data information in a storage area to the reader; or if the matching fails, the passive terminal does not perform any processing. After receiving data information sent by the at least one passive terminal, the reader sends the at least one piece of data information to the UPF network element in batches through the first tunnel, and then the UPF network element sends the data information to the server.

When the first operation is the batch read operation, the first operation is that the reader sends an eighth broadcast message to the M passive terminals, where the eighth broadcast message includes the tag identifier of the at least one passive terminal, and the eighth broadcast message indicates the passive terminal to send data information in a storage area of the passive terminal to the reader. The first operation result is the data information in the storage area of the passive terminal.

If the first operation is the batch write operation, the reader sends a ninth broadcast message to the M passive terminals, where the ninth broadcast message includes to-be-written information and the tag identifier of the at least one passive terminal, and the ninth broadcast message indicates the passive terminal to write the to-be-written information into a storage area of the passive terminal. For any passive terminal in the M passive terminals, after receiving the ninth broadcast message, the passive terminal matches a tag identifier of the passive terminal with the tag identifier of the at least one passive terminal in the second broadcast message; and if the matching succeeds, the passive terminal writes the to-be-written information into a storage area; or if the matching fails, the passive terminal does not perform any processing. When the matching succeeds, if the passive terminal successfully writes the to-be-written information into the storage area, the passive terminal sends a write success message to the reader; otherwise, the passive terminal sends a write failure message to the reader. After receiving a write success message or a write failure message sent by the at least one passive terminal, the reader sends the at least one write success message or write failure message to the UPF network element in batches through the first tunnel, and then the UPF network element sends the write success message or write failure message to the server.

When the first operation is the batch write operation, the first operation is that the reader sends a fifth broadcast message to the M passive terminals, where the ninth broadcast message includes to-be-written information and the tag identifier of the at least one passive terminal, and the ninth broadcast message indicates the passive terminal to write the to-be-written information into a storage area of the passive terminal. The first operation result is the write success message or the write failure message of the passive terminal.

If the first operation is the positioning operation, the reader sends a tenth broadcast message to the M passive terminals, where the tenth broadcast message includes the tag identifier of the at least one passive terminal, and the tenth broadcast message indicates the passive terminal to send location information to the reader. For any passive terminal in the M passive terminals, after receiving the sixth broadcast message, the passive terminal matches a tag identifier of the passive terminal with the tag identifier of the at least one passive terminal in the tenth broadcast message; and if the matching succeeds, the passive terminal sends location information to the reader; or if the matching fails, the passive terminal does not perform any processing. After receiving a piece of location information sent by a passive terminal, the reader sends the location information to the UPF network element through the first tunnel, and then the UPF network element sends the location information to the server. In addition, the reader waits for location information sent by another passive terminal (other than the passive terminal that has sent the location information).

When the first operation is the positioning operation, the first operation is that the reader sends a tenth broadcast message to the M passive terminals, where the tenth broadcast message includes the tag identifier of the at least one passive terminal, and the tenth broadcast message indicates the passive terminal to send location information to the reader. The first operation result is the location information of the passive terminal.

If the first operation is the disable operation, the reader sends an eleventh broadcast message to the M passive terminals, where the eleventh broadcast message includes the tag identifier of the at least one passive terminal, and the eleventh broadcast message indicates the passive terminal to invalidate the tag identifier in the passive terminal. For any passive terminal in the M passive terminals, after receiving the eleventh broadcast message, the passive terminal matches a tag identifier of the passive terminal with the tag identifier of the at least one passive terminal in the eleventh broadcast message; and if the matching succeeds, the passive terminal performs disable processing on the tag identifier of the passive terminal to invalidate the tag identifier; or if the matching fails, the passive terminal does not perform any processing. When the matching succeeds, if the passive terminal successfully disables the tag identifier, the passive terminal sends a disable success message to the reader; otherwise, the passive terminal sends a disable failure message to the reader. After receiving a disable success message or a disable failure message sent by a passive terminal, the reader sends the disable success message or the disable failure message to the UPF network element through the first tunnel, and then the UPF network element sends the disable success message or the disable failure message to the server. In addition, the reader waits for a disable success message or a disable failure message sent by another passive terminal (other than the passive terminal that has sent the disable success message or the disable failure message).

When the first operation is the disable operation, the first operation is that the reader sends an eleventh broadcast message to the M passive terminals, where the eleventh broadcast message includes the tag identifier of the at least one passive terminal, and the eleventh broadcast message indicates the passive terminal to invalidate the tag identifier in the passive terminal. The first operation result is the disable success message or the disable failure message of the passive terminal.

If the first operation is the tag information obtaining operation, the reader sends a twelfth broadcast message to the M passive terminals, where the twelfth broadcast message includes the tag identifier of the at least one passive terminal, the twelfth broadcast message indicates the passive terminal to send tag information to the reader, and the tag information may be at least one of the following: a tag identifier of the passive terminal, data information stored in a storage area of the passive terminal, and location information of the passive terminal. For any passive terminal in the M passive terminals, after receiving the twelfth broadcast message, the passive terminal matches a tag identifier of the passive terminal with the tag identifier of the at least one passive terminal in the twelfth broadcast message; and if the matching succeeds, the passive terminal sends tag information of the passive terminal to the reader. After receiving a piece of tag information sent by a passive terminal, the reader sends the tag information to the UPF network element through the first tunnel, and then the UPF network element sends the tag information to the server. In addition, the reader waits for tag information sent by another passive terminal (other than the passive terminal that has sent the tag information).

When the first operation is the tag information obtaining operation, the first operation is that the reader sends a twelfth broadcast message to the M passive terminals, where the twelfth broadcast message includes the tag identifier of the at least one passive terminal, and the twelfth broadcast message indicates the passive terminal to send tag information to the reader. The first operation result is the tag information of the passive terminal.

When the filter information includes a network identifier, a user identifier, or a tag identifier range, the first operation performed by the reader is similar to the first operation performed by the reader when the filter information includes the tag identifier of the at least one first passive terminal, and details are not described below.

S606: The reader sends the first operation result to the UPF network element through the first tunnel.

S607: The UPF network element encapsulates the first operation result.

S608: The UPF network element sends the encapsulated first operation result to the server.

In this embodiment of this application, the first tunnel is a user plane channel, and the user plane channel is deployed in a campus in which a business entity is located. When a server and a passive terminal perform data transmission through the first tunnel, it can be effectively ensured that transmitted data does not go out of the campus, thereby avoiding the risk of data leakage and implementing secure data transmission.

An embodiment of this application provides another communication method, used to establish a first tunnel between a reader and a UPF network element. The first tunnel may be used to transmit a first packet, and may be further used to transmit a second packet. A service type of the first packet may include any one of the following: an inventory type, a read type, a write type, a positioning type, a disable type, a tag information obtaining type, and the like. The read type includes a common read type and a batch read type, the write type includes a common write type and a batch write type, and a service type of the second packet is different from the service type of the first packet. The communication method may be applied to the communication system shown in FIG. 2. For the communication method, refer to a flowchart shown in FIG. 3. The following specifically describes a procedure of the method.

S701: A server sends a second message to an NEF network element.

In a possible implementation, the second message includes a server identifier, and an address and a port number of the server. In this embodiment of this application, the server may be an application function network element. For example, the server is an AF network element. When the server is the AF network element, the second message includes an AF identifier, an address and a port number of the AF, and the preset service type.

Optionally, the second message may further include a preset service type. The preset service type may include any one of the following: an inventory type, a common read type, a common write type, a batch read type, a batch write type, a positioning type, a disable type, a tag information obtaining type, and the like.

The second message may further include area information of a to-be-operated tag. If the second message does not include the area information of the to-be-operated tag, a TMF network element may query subscription data of the server to obtain the area information of the to-be-operated tag.

S702: The NEF network element sends the second message to the TMF network element.

In a possible implementation, the server may alternatively directly send the second message to the TMF network element without using the NEF network element.

S703: The TMF network element generates a third message based on the second message.

In a possible implementation, the TMF network element selects, from a plurality of candidate SMF network elements based on the obtained area information of the to-be-operated passive terminal, an SMF network element associated with the area information. A specific implementation may be: converting the area information of the to-be-operated passive terminal into a cell list, and selecting, from the plurality of candidate SMF network elements based on the cell list, an SMF network element associated with the cell list.

In a possible implementation, the third message includes second indication information, the second indication information is determined based on the second message, the second indication information indicates a reader to set a mapping relationship, and the mapping relationship is used by the reader to determine a first operation.

The TMF network element may determine the second indication information in the following implementation. The specific implementation may be as follows: The TMF network element uses a specified service type in an eighth mapping relationship as the preset service type, uses a specified operation corresponding to the specified service type in the eighth mapping relationship as a preset operation, and uses the preset service type and the preset operation as the second indication information. The eighth mapping relationship includes a mapping relationship between a specified service type and a specified operation. It should be understood that the eighth mapping relationship may be stored in the TMF network element, or may be stored in another device that can be accessed by the TMF network element. This is not limited herein.

A correspondence between the specified service type and the specified operation in the eighth mapping relationship is shown in Table 1.

When the specified service type is the inventory type, the inventory type is used as the preset service type, and an inventory operation corresponding to the inventory type is used as the preset operation. When the specified service type is the common read type, the common read type is used as the preset service type, and a common read operation corresponding to the common read type is used as the preset operation. By analogy, nine groups of obtained preset service types and preset operations are used as the second indication information.

In this embodiment of this application, the preset service type may include any one of the following: an inventory type, a common read type, a common write type, a batch read type, a batch write type, a positioning type, a disable type, a tag information obtaining type, and the like. Correspondingly, the preset operation may include any one of the following: an inventory operation, a common read operation, a common write operation, a batch read operation, a batch write operation, a positioning operation, a disable operation, a tag information obtaining operation, and the like.

The third message further includes a session tag. The session tag is generated by the TMF network element based on the preset service type, and the session tag may be used to identify a first tunnel.

The third message further includes the server identifier and the address and the port number of the server, and the server identifier and the address and the port number of the server are obtained from the second message.

S704: The TMF network element sends the third message to the SMF network element. The third message indicates the SMF to establish a P-IoT session.

S705: The SMF network element sends a fourth message to the UPF network element, where the fourth message may indicate the UPF network element to send CN tunnel information. Alternatively, the fourth message may indicate the UPF network element to send CN tunnel information and an address and a port number of the UPF network element.

S706: The UPF network element sends the CN tunnel information to the SMF network element.

In a possible implementation, if the fourth message indicates the UPF network element to send the CN tunnel information, the UPF network element sends the CN tunnel information to the SMF network element after receiving the fourth message sent by the SMF network element.

In another possible implementation, if the fourth message indicates the UPF network element to send the CN tunnel information and the address and the port number of the UPF network element, the UPF network element sends the CN tunnel information and the address and the port number of the UPF network element to the SMF network element after receiving the fourth message sent by the SMF network element.

In this embodiment of this application, the CN tunnel information includes a tunnel endpoint identifier (tunnel endpoint identifier, TEID) and a transport layer address. The transport layer address may be address information of the UPF.

S707: The SMF network element determines a first tunnel identifier based on at least the CN tunnel information.

In a possible implementation, the SMF network element may determine the first tunnel identifier in the following two possible implementations. The specific implementations are as follows:

In a first possible implementation, the SMF network element may randomly generate a sequence or a number, and use the random sequence or the random number as the first tunnel identifier.

In a second possible implementation, the SMF network element may determine the first tunnel identifier based on the TEID and the transport layer address in the CN tunnel information.

In a third possible implementation, the SMF network element may determine the first tunnel identifier based on the TEID and the transport layer address in the CN tunnel information and the session tag.

S708: The SMF network element sends a first message to an AMF network element.

In a possible implementation, the first message includes the CN tunnel information and the second indication information, the second indication information indicates the reader to set the mapping relationship, and the mapping relationship is used by the reader to determine the first operation.

The first message may further include the first tunnel identifier.

S709: The AMF network element sends the first message to the reader.

S710: The reader determines AN tunnel information based on the CN tunnel information in the first message.

In this embodiment of this application, the AN tunnel information includes an endpoint identifier (endpoint identifier) of the reader and a corresponding quality of service flow identifier (QoS flow identifier, QFI).

The reader establishes a ninth mapping relationship between the CN tunnel information, the AN tunnel information, and the first tunnel identifier. It should be understood that the ninth mapping relationship may be stored in the reader, or may be stored in another device that can be accessed by the reader. This is not limited herein. After the reader establishes the ninth mapping relationship, when the reader uses the first tunnel, the first tunnel may be determined based on the ninth mapping relationship, and the first tunnel is used for data transmission.

S711: The reader sends the AN tunnel information to the AMF network element.

S712: The reader sets the mapping relationship based on at least the second indication information in the first message. The second indication information includes the preset service type and the preset operation.

In a possible implementation, the reader may set the mapping relationship in the following possible implementation. The specific implementation may be as follows:

The reader establishes a third mapping relationship between the preset service type and the preset operation.

In this application, the third mapping relationship generated in the foregoing three implementations may be stored in the reader, or may be stored in another device that can be accessed by the reader. This is not limited herein.

An execution sequence between S712, and S710 and S711 is not limited.

S713: The AMF network element sends the AN tunnel information to the SMF network element.

S714: The SMF network element sends a fifth message to the UPF network element.

In a first possible implementation, the fifth message includes the AN tunnel information, the first tunnel identifier, and at least one of the following: the address and the port number of the server, and the second indication information. The second indication information may include the preset service type and the preset operation.

After receiving the fifth message, the UPF network element stores the AN tunnel information and the first tunnel identifier in the fifth message. It should be understood that, after the reader receives the CN tunnel information and the UPF network element receives the AN tunnel information, establishment of the first tunnel between the reader and the UPF network element is completed. The UPF network element may determine the first tunnel by using the stored first tunnel identifier.

The UPF network element may further establish the ninth mapping relationship between the CN tunnel information, the AN tunnel information, and the first tunnel identifier. It should be understood that the ninth mapping relationship may be stored in the reader, or may be stored in another device that can be accessed by the reader. This is not limited herein. After the UPF network element establishes the ninth mapping relationship, when the UPF network element uses the first tunnel, the first tunnel may be determined based on the ninth mapping relationship, and the first tunnel is used for data transmission.

In addition, the UPF network element further determines the third mapping relationship based on the fifth message. Possible implementations are as follows:

Implementation fl: When the fifth message includes the address and the port number of the server and the second indication information, and the second indication information includes the preset service type, the UPF network element first generates preset four-tuple information based on the address and the port number of the server and the address and the port number of the UPF network element; and then establishes a fourth mapping relationship between the preset four-tuple information and the preset service type. The address of the UPF network element is a public network address. It should be understood that the fourth mapping relationship may be stored in the UPF network element, or may be stored in another device that can be accessed by the UPF network element. This is not limited herein.

Implementation f2: When the fifth message includes the second indication information, and the second indication information includes the preset service type and the preset operation, the UPF network element establishes a fifth mapping relationship between the preset service type and the preset operation. It should be understood that the fifth mapping relationship may be stored in the UPF network element, or may be stored in another device that can be accessed by the UPF network element. This is not limited herein.

Implementation f3: When the fifth message includes the address and the port number of the server and the second indication information, and the second indication information includes the preset operation, the UPF network element first generates preset four-tuple information based on the address and the port number of the server and the address and the port number of the UPF network element; and then establishes a sixth mapping relationship between the preset four-tuple information and the preset operation. The address of the UPF network element is a public network address. It should be understood that the sixth mapping relationship may be stored in the UPF network element, or may be stored in another device that can be accessed by the UPF network element. This is not limited herein.

It should be understood that Implementation fl to Implementation f3 may be used separately, or may be used in combination. This is not limited herein.

In a second possible implementation, the fifth message includes the AN tunnel information, the first tunnel identifier, and at least one of the following mapping relationships: a fourth mapping relationship, a fifth mapping relationship, and a sixth mapping relationship.

After receiving the fifth message, the UPF network element stores the AN tunnel information and the first tunnel identifier in the fifth message. It should be understood that, after the reader receives the CN tunnel information and the UPF network element receives the AN tunnel information, establishment of the first tunnel between the reader and the UPF network element is completed. The UPF network element may determine the first tunnel by using the stored first tunnel identifier.

The UPF network element may further establish the ninth mapping relationship between the CN tunnel information, the AN tunnel information, and the first tunnel identifier. It should be understood that the ninth mapping relationship may be stored in the reader, or may be stored in another device that can be accessed by the reader. This is not limited herein. After the UPF network element establishes the ninth mapping relationship, when the UPF network element uses the first tunnel, the first tunnel may be determined based on the ninth mapping relationship, and the first tunnel is used for data transmission.

In a possible implementation, the fourth mapping relationship may be set in the following manner: The SMF network element first generates preset four-tuple information based on the address and the port number of the server and the address and the port number of the UPF network element; and then establishes the fourth mapping relationship between the preset four-tuple information and the preset service type in the second indication information. The address of the UPF network element is a public network address.

In a possible implementation, the fifth mapping relationship may be set in the following manner: The SMF network element establishes the fifth mapping relationship between the preset service type and the preset operation in the second indication information.

In a possible implementation, the sixth mapping relationship may be set in the following manner: The SMF network element first generates preset four-tuple information based on the address and the port number of the server and the address and the port number of the UPF network element; and then establishes the sixth mapping relationship between the preset four-tuple information and the preset operation in the second indication information. The address of the UPF network element is a public network address.

In this embodiment of this application, when the second indication information includes the preset service type, the fifth message includes the AN tunnel information, the first tunnel identifier, and the fourth mapping relationship.

When the second indication information includes the preset service type and the preset operation, the fifth message includes the AN tunnel information, the first tunnel identifier, and the fifth mapping relationship.

When the second indication information includes the preset operation, the fifth message includes the AN tunnel information, the first tunnel identifier, and the sixth mapping relationship.

S715: The UPF network element sends sixth information to the SMF network element.

In a possible implementation, the sixth message includes the first tunnel identifier, and the address and the port number of the UPF network element.

S716: The SMF network element sends the sixth information to the TMF network element.

S717: The TMF network element sends the sixth information to the NEF network element.

S718: The NEF network element sends the sixth information to the server.

In this embodiment of this application, a tunnel is established between the reader and the UPF network element, and the tunnel may transmit packets of different service types, so that establishment of a plurality of tunnels between the reader and the UPF network element can be avoided, complexity of tunnel establishment can be effectively simplified, and tunnel establishment efficiency can be improved.

An embodiment of this application provides a communication method, used to transmit a first packet between a passive terminal and a server. The method may be applied to the communication system shown in FIG. 2. For the communication method, refer to a flowchart shown in FIG. 6. The following specifically describes a procedure of the method.

S801: A server sends a second packet to a UPF network element.

In this application, the second packet may include four-tuple information, and the four-tuple information includes an address and a port number of the server, and an address and a port number of the UPF network element.

Optionally, the second packet may further include filter information, and the filter information may include at least one of the following: a network identifier, a user identifier, a tag identifier of at least one first passive terminal, and a tag identifier range. In this embodiment of this application, the filter information may also be referred to as mask information.

The network identifier in the second packet is described by using an example. The network identifier may be a public land mobile network address (public land mobile network ID, PLMN ID).

The user identifier in the second packet is described by using an example. The user identifier may be an AF identifier.

The tag identifier of the at least one first passive terminal in the second packet is described by using an example. The second packet includes a tag identifier 1 and a tag identifier 2.

The tag identifier range in the second packet is described by using an example. The second packet includes a tag identifier 1 to a tag identifier 5.

Optionally, the second packet may further include to-be-processed information. For example, when the server performs a write operation on the passive terminal, the to-be-processed information may be to-be-written information, and the passive terminal may write the to-be-written information into a storage area of the passive terminal. When the server performs a read operation on the passive terminal, the to-be-processed information may be storage area index information, and the passive terminal may obtain data information from a storage area corresponding to the storage area index information. When the server performs a positioning operation on the passive terminal, the to-be-processed information may be range information, and the passive terminal determines whether the passive terminal is within a range determined based on the range information.

S802: The UPF network element generates a first packet based on the second packet.

In a possible implementation, the first packet includes first indication information, the first indication information is determined based on the four-tuple information, and the first indication information indicates a reader to perform a first operation.

Optionally, when the second packet includes an identifier of the at least one first passive terminal, the first packet may further include the identifier of the at least one first passive terminal.

Optionally, when the second packet includes the to-be-written information, the first packet may further include the to-be-written information.

In a possible implementation, the UPF network element may determine the first indication information in the following three possible implementations. The specific implementations may be as follows:
Implementation g1: When the UPF network element stores a fourth mapping relationship, the UPF network element first determines, based on the four-tuple information and the fourth mapping relationship, a first service type corresponding to the four-tuple information, and then generates the first indication information based on the first service type. The fourth mapping relationship includes a mapping relationship between preset four-tuple information and a preset service type.

Further explanation is as follows: When the UPF network element stores the fourth mapping relationship, the UPF network element searches the fourth mapping relationship for the four-tuple information, and if preset four-tuple information that is the same as the four-tuple information exists in the fourth mapping relationship, uses a preset service type corresponding to the preset four-tuple information as the first service type, and generates the first indication information based on the first service type.

Implementation g2: When the UPF network element stores a fourth mapping relationship and a fifth mapping relationship, the UPF network element first determines, based on the four-tuple information and the fourth mapping relationship, a first service type corresponding to the four-tuple information; then determines, based on the fifth mapping relationship, a first operation corresponding to the first service type; and finally generates the first indication information based on the first operation. The fourth mapping relationship includes a correspondence between preset four-tuple information and a preset service type, and the fifth mapping relationship includes a correspondence between the preset service type and a preset operation.

Further explanation is as follows: When the UPF network element stores the fourth mapping relationship and the fifth mapping relationship, the UPF network element searches the fourth mapping relationship for the four-tuple information, and if preset four-tuple information that is the same as the four-tuple information exists in the fourth mapping relationship, uses a preset service type corresponding to the preset four-tuple information as the first service type. The UPF network element searches the fifth mapping relationship for the first service type, and if a preset service type that is the same as the first service type exists in the fifth mapping relationship, uses a preset operation corresponding to the preset service type as the first operation, and generates the first indication information based on the first operation.

Implementation g3: When the UPF network element stores a sixth mapping relationship, the UPF network element determines, based on the four-tuple information and the sixth mapping relationship, a first operation corresponding to the four-tuple information, and then generates the first indication information based on the first operation. The sixth mapping relationship includes a mapping relationship between preset four-tuple information and a preset operation.

Further explanation is as follows: When the UPF network element stores the sixth mapping relationship, the UPF network element searches the sixth mapping relationship for the four-tuple information, and if preset four-tuple information that is the same as the four-tuple information exists in the sixth mapping relationship, uses a preset operation corresponding to the preset four-tuple information as the first operation, and generates the first indication information based on the first operation.

S803: The UPF network element sends the first packet to the reader through a first tunnel. One end of the first tunnel is connected to the reader, and the other end of the first tunnel is connected to the UPF network element.

S804: The reader performs the first operation based on the first indication information in the first packet.

In a possible implementation, the reader may determine the first operation in the following two possible implementations. The specific implementations are as follows:

Implementation h1: When the first indication information includes the first service type and the reader stores a third mapping relationship, the reader determines, based on the first service type and the third mapping relationship, the first operation corresponding to the first service type, and performs the first operation. The third mapping relationship includes a mapping relationship between a preset service type and a preset operation.

Further explanation is as follows: When the first indication information includes the first service type, and the reader stores the third mapping relationship, the reader searches the third mapping relationship for the first service type, and if a preset service type that is the same as the first service type exists in the third mapping relationship, uses a preset operation corresponding to the preset service type as the first operation, and performs the first operation.

Implementation h2: When the first indication information includes the first operation, the reader obtains the first operation from the first indication information, and performs the first operation.

S805: The passive terminal sends a first operation result to the reader.

S806: The reader sends the first operation result to the UPF network element through the first tunnel.

S807: The UPF network element encapsulates the first operation result.

S808: The UPF network element sends the encapsulated first operation result to the server.

In this embodiment of this application, the first tunnel is a user plane channel, and the user plane channel is deployed in a campus in which a business entity is located. When a server and a passive terminal perform data transmission through the first tunnel, it can be effectively ensured that transmitted data does not go out of the campus, thereby avoiding the risk of data leakage and implementing secure data transmission.

In the foregoing embodiments provided in this application, the methods provided in embodiments of this application are separately described from a perspective of interaction between the devices. To implement functions in the foregoing method provided in embodiments of this application, the reader, the UPF network element, the TMF network element, or the SMF network element may include a hardware structure and/or a software module, and the foregoing functions are implemented in a form of a hardware structure, a software module, or a combination of a hardware structure and a software module. Whether a function in the foregoing functions is performed in a manner of a hardware structure, a software module, or a hardware structure and a software module depends on specific applications and design constraints of the technical solutions.

Division into the modules in embodiments of this application is an example, and is merely logical function division. In actual implementation, there may be another division manner. In addition, functional modules in embodiments of this application may be integrated into one processor, or each module may exist alone physically, or two or more modules may be integrated into one module. The integrated module may be implemented in a form of hardware, or may be implemented in a form of a software functional module.

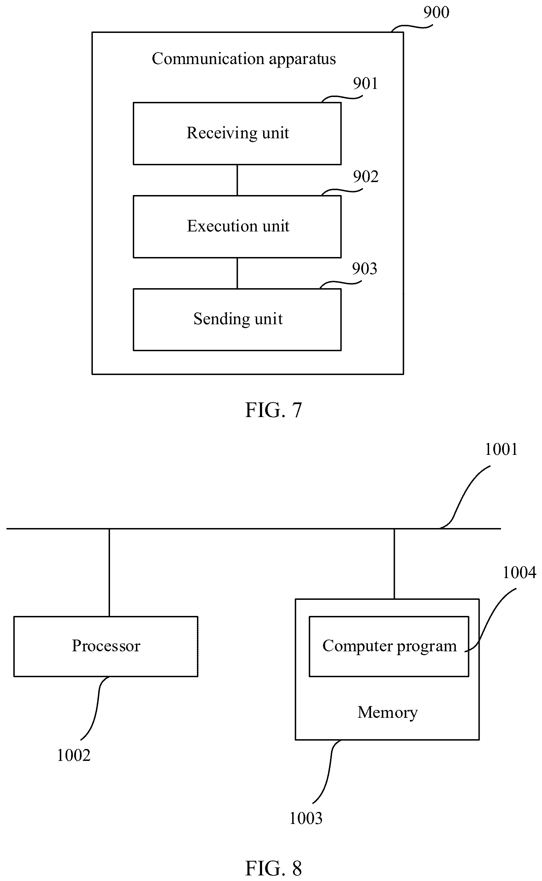

Same as the foregoing concept, as shown in FIG. 7, an embodiment of this application further provides a communication apparatus 900, configured to implement a function of the reader, the UPF network element, the TMF network element, or the SMF network element in the foregoing method. For example, the communication apparatus may be a software module or a chip system. In this embodiment of this application, the chip system may include a chip, or may include a chip and another discrete component. The communication apparatus 900 may include a receiving unit 901, an execution unit 902, and a sending unit 903.

In this embodiment of this application, the receiving unit, the execution unit, and the sending unit included in the communication apparatus 900 are respectively configured to perform receiving, execution, and sending steps of the reader, the UPF network element, the TMF network element, or the SMF network element in the foregoing method embodiments. The sending unit, the execution unit, and the receiving unit may be one integrated unit, or may be four individual units.

The communication apparatus provided in embodiments of this application is described below in detail with reference to FIG. 7 and FIG. 8. It should be understood that descriptions of apparatus embodiments correspond to the descriptions of the method embodiments. Therefore, for content that is not described in detail, refer to the foregoing method embodiments. For brevity, details are not described herein again.

In an implementation, the communication apparatus 900 may perform the following functions.

The receiving unit 901 is configured to receive a first packet sent by a user plane function UPF network element through a first tunnel, where one end of the first tunnel is connected to the reader, the other end of the first tunnel is connected to the UPF network element, the first packet includes first indication information, and the first indication information indicates the reader to perform a first operation.

The execution unit 902 is configured to perform the first operation based on the first indication information.

The receiving unit 901 is further configured to receive a first operation result from at least one first passive terminal, and send the first operation result to the UPF network element, where the at least one first passive terminal is within a signal coverage area of the reader.

In an implementation, the communication apparatus 900 may perform the following functions.

The receiving unit 901 is configured to receive a second packet from a server, where the second packet includes four-tuple information.

The sending unit 903 is configured to send a first packet to a reader through a first tunnel, where the first packet includes first indication information, the first indication information is determined based on the four-tuple information, the first indication information indicates the reader to perform a first operation, one end of the first tunnel is connected to the reader, and the other end of the first tunnel is connected to a UPF network element.

In an implementation, the communication apparatus 900 may perform the following functions.

The receiving unit 901 is configured to receive a second message from a server, where the second message indicates a session management function SMF network element to establish a first tunnel.

The sending unit 903 is configured to send a third message to the SMF network element, where the third message includes second indication information, the second indication information indicates a reader to set a mapping relationship, and the mapping relationship is used by the reader to determine a first operation.

In an implementation, the communication apparatus 900 may perform the following functions.

The receiving unit 901 is configured to receive a third message sent by a tag management function TMF network element, where the third message includes second indication information, the second indication information indicates a reader to set a mapping relationship, the mapping relationship is used by the reader to determine a first operation, and the third message further includes an address and a port number of a server.

The receiving unit 901 is further configured to receive an address and a port number of a UPF network element that are sent by the UPF network element.

The execution unit 902 is configured to set the mapping relationship based on at least one of the address and the port number of the server, the address and the port number of the UPF network element, and the second indication information, and an SMF network element sends a fifth message to the UPF network element, where the fifth message includes the mapping relationship.

The foregoing is merely an example. The receiving unit, the execution unit, and the sending unit in the communication apparatus 900 may further perform other functions. For more detailed descriptions, refer to related descriptions in the foregoing method embodiments. Details are not described herein again.

In the foregoing embodiments provided in this application, the method provided in embodiments of this application is described from a perspective of the communication apparatus serving as an execution body. To implement functions in the foregoing method provided in embodiments of this application, the communication apparatus may include a hardware structure and/or a software module, and the foregoing functions are implemented in a form of a hardware structure, a software module, or a combination of a hardware structure and a software module. Whether a function in the foregoing functions is performed in a manner of a hardware structure, a software module, or a hardware structure and a software module depends on specific applications and design constraints of the technical solutions.

For example, when hardware is used for implementation, for hardware implementation of the communication apparatus, refer to FIG. 8 and related descriptions thereof.

With reference to FIG. 8, the communication apparatus may include one or more processors 1002, a memory 1003, one or more applications (not shown), and one or more computer programs 1004. The foregoing components may be connected by using one or more communication buses 1001. The one or more computer programs 1004 are stored in the memory 1003 and are configured to be executed by the one or more processors 1002. The one or more computer programs 1004 include instructions, and the instructions may be used to perform the method in any one of the foregoing embodiments. The one or more processors 1002 may perform functions of the receiving unit 901, the execution unit 902, and the sending unit 903.

An embodiment of this application further provides a computer-readable storage medium. The computer-readable storage medium stores computer instructions. When the computer instructions are run on a communication apparatus, the communication apparatus is caused to implement the communication method in the foregoing embodiments.

An embodiment of this application further provides a computer program product. When the computer program product runs on a computer, the computer is caused to perform the communication method in the foregoing embodiments.

The communication apparatus, the computer-readable storage medium, the computer program product, and the chip provided in embodiments of this application are all configured to perform the corresponding method provided above. Therefore, for beneficial effects that can be achieved by the communication apparatus, the computer-readable storage medium, the computer program product, and the chip, refer to the beneficial effects of the corresponding method provided above. Details are not described herein again.

It may be learned by a person skilled in the art from the foregoing description of the implementations that, for convenience and brevity of description, division into only the foregoing functional modules is used as an example for description. In actual application, the foregoing functions may be allocated to different functional modules for implementation according to a requirement, that is, an internal structure of an apparatus is divided into different functional modules, to complete all or some of the functions described above.

In the several embodiments provided in this application, it should be understood that the disclosed apparatus and method may be implemented in other manners. For example, the described apparatus embodiments are merely examples. For example, division into the modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may be one or more physical units, may be located in one place, or may be distributed in a plurality of different places. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing content is merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a reader, and the method comprises:
receiving a first packet sent by a user plane function UPF network element through a first tunnel, wherein one end of the first tunnel is connected to the reader, the other end of the first tunnel is connected to the UPF network element, the first packet comprises first indication information, and the first indication information indicates the reader to perform a first operation;
performing the first operation based on the first indication information; and
receiving a first operation result from at least one first passive terminal, and sending the first operation result to the UPF network element, wherein the at least one first passive terminal is within a signal coverage area of the reader.

2. The method according to claim 1, wherein the first indication information comprises the first operation; and
the performing the first operation based on the first indication information comprises:
obtaining the first operation from the first indication information, and performing the first operation.

3. The method according to claim 1, wherein the first indication information comprises a first session identifier; and
the performing the first operation based on the first indication information comprises:
determining, based on the first session identifier and a preset mapping relationship, the first operation corresponding to the first session identifier, and performing the first operation.

4. The method according to claim 3, wherein the mapping relationship comprises a first mapping relationship, and the first mapping relationship comprises a mapping relationship between a first tunnel identifier and a preset operation.

5. The method according to claim 3, wherein the mapping relationship comprises a second mapping relationship and a third mapping relationship, the second mapping relationship comprises a mapping relationship between a first tunnel identifier and a preset service type, and the third mapping relationship comprises a mapping relationship between the preset service type and a preset operation; and
the determining, based on the first session identifier and the preset mapping relationship, the first operation corresponding to the first session identifier comprises:
determining, based on the first session identifier and the second mapping relationship, a first service type corresponding to the first session identifier; and
determining, based on the first service type and the third mapping relationship, the first operation corresponding to the first service type.

6. The method according to claim 1, wherein the first indication information comprises a first service type; and
the performing the first operation based on the first indication information comprises:
determining, based on the first service type and a preset mapping relationship, the first operation corresponding to the first service type, and performing the first operation.

7. The method according to claim 6, wherein the mapping relationship comprises a third mapping relationship, and the third mapping relationship comprises a mapping relationship between a preset service type and a preset operation.

8. The method according to any one of claims 3 to 7, before the receiving the first packet sent by the user plane function UPF network element through the first tunnel, further comprising:
receiving a first message sent by a session management function SMF network element, wherein the first message comprises second indication information, the second indication information indicates the reader to set the mapping relationship, and the mapping relationship is used to determine the first operation; and
setting the mapping relationship based on at least the second indication information in the first message.

9. The method according to claim 8, wherein the second indication information comprises the preset operation, and the first message further comprises the first tunnel identifier; and
the setting the mapping relationship based on at least the second indication information in the first message comprises:
establishing the first mapping relationship between the first tunnel identifier and the preset operation.

10. The method according to claim 8, wherein the second indication information comprises the preset service type, and the first message further comprises the first tunnel identifier; and
the setting the mapping relationship based on at least the second indication information in the first message comprises:
establishing the second mapping relationship between the first tunnel identifier and the preset service type.

11. The method according to claim 8, wherein the second indication information comprises the preset service type and the preset operation; and
the setting the mapping relationship based on at least the second indication information in the first message comprises:
establishing the third mapping relationship between the preset service type and the preset operation.

12. A communication method, wherein the method is applied to a user plane function UPF network element, and the method comprises:
receiving a second packet from a server, wherein the second packet comprises four-tuple information; and
sending a first packet to a reader through a first tunnel, wherein the first packet comprises first indication information, the first indication information is determined based on the four-tuple information, the first indication information indicates the reader to perform a first operation, one end of the first tunnel is connected to the reader, and the other end of the first tunnel is connected to the UPF network element.

13. The method according to claim 12, wherein the first indication information is determined in the following manner:
determining, based on the four-tuple information and a fourth mapping relationship, a first service type corresponding to the four-tuple information, wherein the fourth mapping relationship comprises a mapping relationship between preset four-tuple information and a preset service type;
determining, based on a fifth mapping relationship, the first operation corresponding to the first service type, wherein the fifth mapping relationship comprises a mapping relationship between the preset service type and a preset operation; and
generating the first indication information based on the first operation.

14. The method according to claim 12, wherein the first indication information is determined in the following manner:
determining, based on the four-tuple information and a sixth mapping relationship, the first operation corresponding to the four-tuple information, wherein the sixth mapping relationship comprises a mapping relationship between preset four-tuple information and a preset operation; and
generating the first indication information based on the first operation.

15. The method according to claim 12, wherein the first indication information is determined in the following manner:
determining, based on the four-tuple information and a fourth mapping relationship, a first service type corresponding to the four-tuple information, wherein the fourth mapping relationship comprises a mapping relationship between preset four-tuple information and a preset service type;
determining, based on a seventh mapping relationship, a first session identifier corresponding to the first service type, wherein the seventh mapping relationship comprises a mapping relationship between the preset service type and a first tunnel identifier; and
generating the first indication information based on the first session identifier.

16. The method according to claim 12, wherein the first indication information is determined in the following manner:
determining, based on the four-tuple information and a fourth mapping relationship, a first service type corresponding to the four-tuple information, wherein the fourth mapping relationship comprises a mapping relationship between preset four-tuple information and a preset service type; and
generating the first indication information based on the first service type.

17. The method according to claim 13, 15, or 16, before the receiving the second packet from the server, further comprising:
receiving the fourth mapping relationship from a session management function SMF network element, wherein the fourth mapping relationship is generated based on the preset four-tuple information and the preset service type.

18. The method according to claim 13, before the receiving the second packet from the server, further comprising:
receiving the fifth mapping relationship from an SMF network element, wherein the fifth mapping relationship is generated based on the preset service type and the preset operation.

19. The method according to claim 14, before the receiving the second packet from the server, further comprising:
receiving the sixth mapping relationship from an SMF network element, wherein the sixth mapping relationship is generated based on the preset four-tuple information and the preset operation.

20. The method according to claim 15, before the receiving the second packet from the server, further comprising:
receiving the seventh mapping relationship from an SMF network element, wherein the seventh mapping relationship is generated based on the preset service type and the first tunnel identifier.

21. The method according to claim 17 or 19, wherein the preset four-tuple information is generated based on an address and a port number of the server, and an address and a port number of the UPF network element.

22. A communication method, wherein the method is applied to a tag management function TMF network element, and the method comprises:
receiving a second message from a server, wherein the second message indicates a session management function SMF network element to establish a first tunnel; and
sending a third message to the SMF network element, wherein the third message comprises second indication information, the second indication information indicates a reader to set a mapping relationship, and the mapping relationship is used by the reader to determine a first operation.

23. The method according to claim 22, wherein the second message comprises a preset service type, and the second indication information is determined based on the preset service type.

24. The method according to claim 23, wherein the second indication information is determined in the following manner:
determining, based on the preset service type and an eighth mapping relationship, a preset operation corresponding to the preset service type, wherein the eighth mapping relationship comprises a mapping relationship between a specified service type and a specified operation; and
using the preset operation as the second indication information.

25. The method according to claim 23, wherein the second indication information is determined in the following manner:
using the preset service type as the second indication information.

26. The method according to claim 23, wherein the second indication information is determined in the following manner:
determining, based on the preset service type and an eighth mapping relationship, a preset operation corresponding to the preset service type, wherein the eighth mapping relationship comprises a mapping relationship between a specified service type and a specified operation; and
using the preset service type and the preset operation as the second indication information.

27. The method according to claim 22, wherein the second indication information is determined based on an eighth mapping relationship, and the eighth mapping relationship comprises a mapping relationship between a specified service type and a specified operation.

28. The method according to claim 27, wherein the second indication information is determined in the following manner:
using the specified service type as a preset service type;
using the specified operation as a preset operation; and
using the preset service type and the preset operation as the second indication information.

29. A communication apparatus, comprising a processor and a memory, wherein
the processor is configured to execute a computer program or instructions stored in the memory, to cause the communication apparatus to implement the method according to any one of claims 1 to 28.

30. A computer-readable storage medium, storing a computer program or instructions, wherein when the computer program or the instructions are run on a computer, the computer-readable storage medium is caused to implement the method according to any one of claims 1 to 28.

31. A chip, comprising a processor, wherein the processor is coupled to a memory, and is configured to execute a computer program or instructions stored in the memory, to cause the chip to implement the method according to any one of claims 1 to 28.

32. A communication system, comprising a reader, a UPF network element, and a TMF network element, wherein the reader is configured to implement the method according to any one of claims 1 to 11;
the UPF network element is configured to implement the method according to any one of claims 12 to 21; and
the TMF network element is configured to implement the method according to any one of claims 22 to 28.
